(19) Europäisches Patentamt
European Patent Office
Office européen des brevets

(11) Publication number: **0 096 723**
**B1**

(12) **EUROPEAN PATENT SPECIFICATION**

(45) Date of publication of patent specification: **10.08.88**

(51) Int. Cl.$^4$: **H 01 M 4/60,** H 01 B 1/12

(21) Application number: **83900470.2**

(22) Date of filing: **28.12.82**

(86) International application number:
**PCT/US82/01801**

(87) International publication number:
**WO 83/02368 07.07.83 Gazette 83/16**

(54) **BATTERIES FABRICATED WITH ELECTROACTIVE POLYMERS.**

(30) Priority: **28.12.81 US 334508**
**28.12.81 US 334509**
**15.12.82 US 448585**

(43) Date of publication of application:
**28.12.83 Bulletin 83/52**

(45) Publication of the grant of the patent:
**10.08.88 Bulletin 88/32**

(84) Designated Contracting States:
**DE FR GB NL**

(56) References cited:
**EP-A-0 035 715**
**EP-A-0 036 118**
**DE-A-2 043 477**
**FR-A-1 526 657**
**FR-E- 94 536**
**US-A-4 181 779**
**US-A-4 182 797**

**Journal of Polymer Science: Polymer Letters Edition, vol. 18, 9-12, 1980 Takakazu Yamamoto: "Preparation of thermostable and electric-conducting poly (2,5-thienylene)", see the entire document**

(73) Proprietor: **CHEVRON RESEARCH COMPANY**
**P.O. Box 7643**
**San Francisco, CA 94120 (US)**

(72) Inventor: **PAPIR, Yoram S.**
**4 Captain Drive No. 201**
**Emeryville Ca. 94608 (US)**

(74) Representative: **Kosmin, Gerald Emmanuel et al**
**HASELTINE, LAKE & CO. Hazlitt House 28**
**Southampton Buildings Chancery Lane**
**London, WC2A 1AT (GB)**

(56) References cited:
**IBM Technical Disclosure Bulletin, vol. 22, no. 5, October 1979 (New York, US) J. Chambers: "Battery applications of tetrathiafulvalene polymer films", see the entire document**
**Makromol. Chem. 180, 1979, Gerhard Kossmehl "Uber polyarylenalkenylene und polyheteroarylenalkenylene", pages 1441-1463**

**J. Am. Chem. Soc., vol. 101, no. 3, 1979, F.B. Kaufman: "Solid state spectroelectrochemistry of cross-linked donor bound polymer films", pages 547-549**

**EP 0 096 723 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**Description**

Background of the Invention

This invention relates to batteries. More specifically, this invention relates to batteries which incorporate tractable, stable, conductive polymers as the electrodes.

Extensive research is being conducted into stable, light-weight, high-energy density, rechargeable, i.e., secondary, battery systems. Two major applications for such secondary batteries among others are the storage of electric energy for electric vehicle propulsion and load levelling applications for electric utilities.

The battery technologies currently under active study suffer from a variety of drawbacks. Many of the new light-weight, secondary batteries under study employ materials which are spontaneously combustible or highly toxic, such as molten lithium, sodium, sulfur and the like. Other systems, such as the metal-air batteries, utilize molten carbonate electrolytes, which require $CO_2$ scrubbing of the gas stream fed to the air electrode to avoid acid build-up. Many other potentially useful battery electrode materials suffer from dendrite formation upon electrodeposition, and are thus unsuitable for repeated charging and discharging. These factors have resulted in the continued search for alternative battery technologies.

Recently, a new approach to secondary batteries incorporating the electrically conductive polymer polyacetylene has been disclosed. The polyacetylene polymer was disclosed in U.S. Patent Nos. 4,222,903 and 4,204,216. Polyacetylene is an example of an organic polymer which can be rendered conductive by suitable doping procedures. In an electrochemical doping process, the conducting polymers can be used as electrodes in a battery. The ability to charge and discharge such polymers repeatedly provides for their use as electrodes in secondary batteries. The mode by which charge is incorporated into polyacetylene does not involve electrodeposition or require hazardous materials, thus making this an attractive alternative technology in principle. However, the polyacetylene material suffers from a number of drawbacks. In its charged forms, polyacetylene is chemically stable, thus severely limiting the lifetime of any secondary battery device fabricated from this polymer. In addition, the material is insoluble and infusable and so it cannot be made in a tractable form.

The term "a tractable polymer" is used herein as meaning a polymer which can be readily shaped, formed, molded, pressed, cast, etc. into desired articles from solution after the completion of the polymerization reaction of organic polymeric material or from the liquid state, i.e., either from the melt, fluid glassy state, or from solution.

Other electrically conductive polymers, such as poly-p-phenylene, polyphenylene vinylene, and the like, suffer from the same deficiencies as polyacetylene. The tractability deficiencies limit the battery configuration and the chemical instability severely limits the electrode stability of a battery fabricated therefrom. Electrochemical stability of a battery refers to the ability to hold the desired level of charge upon prolonged storage (shelf life) and after repeated charge-discharge cycles (cycle life).

Thus, it would be desirable to have a stable, light-weight, primary or secondary battery comprising electrodes from tractable, electroactive polymers which can be fabricated either from a solution or from a melt into the desired electrode shape. The electrodes must be able to be charged electrochemically to produce conductive, stable electrode materials to serve as the cathode or anode of a light-weight, high-energy density, primary battery and reversibly charged to produce a secondary battery. In addition, it would also be highly desirable to have a material or materials which permit wide substitution of atoms or groups of atoms along the polymer backbone or as side group substituents to the polymer backbone to affect the electrical, morphological, and mechanical properties of the polymer electrodes of the battery. Furthermore, to enhance the electrical stability, it would be preferable to have the electrodes fabricated from polymers of recurring diradical repeat units whose corresponding monomeric repeat units are capable of forming stable cations or anions upon reversible electrochemical oxidation or reduction.

It would also be desirable to have a stable, light-weight battery in which the morphology of the polymer electrodes can be controlled and optimized using polymer-processing techniques which are well-known to anyone skilled in the art of solution processing or melt processing of traditional polymeric materials. In addition, it would be desirable to have a battery which can be operated under normal ambient conditions and which does not contain any highly toxic or spontaneously combustible materials.

A higher power density and energy density than traditional batteries is also desirable. Furthermore, to increase the electrode surface area and hence the power density, it would be desirable to have a light-weight, primary or secondary battery comprising a plurality of thin polymer electrodes sandwiched together in laminar fashion which can be fabricated into a variety of non-traditional shapes for batteries. For electric vehicle applications, these non-traditional shapes can occupy any space within the vehicle such as inside door panels, trunks, hoods, under or within seats, etc.

In accordance with the invention, there is provided a battery electrode comprising a current collector and, as the active material of the electrode, a stable electro-conductive linear tractable unsaturated polymer obtained by incorporating charge-compensating ionic dopants into a linear unsaturated polymer which is capable of undergoing reversible oxidation or reversible reduction and which can be formed into a desired electrode shape, said polymer comprising unsaturated diradical repeat units in the polymer backbone selected from a heterocyclic ring system including at least one Group 5B or Group 6B atom, wherein none of the ring carbon atoms is saturated, a heterocyclic ring system including at least one Group 5B or Group 6B atom wherein none of the ring carbon atoms is saturated and a connecting unit, and mixtures thereof,

wherein said unsaturated diradical repeat unit in the form of a monomeric repeat unit is capable of repeatedly undergoing reversible oxidation and reversible reduction respectively to form a stable ionic species and wherein said connecting unit in the polymer backbone is a conjugated system or atom or group of atoms which maintains π-orbital overlap with the heterocyclic ring system.

The electrode(s) of the invention in their simplest form comprise a current collector, such as metal wire or metal foil or any other electrical conductor, and a linear tractable unsaturated electroactive polymer contacting or surrounding the current collector. The linear polymer is capable of undergoing a reversible oxidation or a reversible reduction or both to form a linear charged polymer incorporating charge compensating ionic dopants. Reduction of the linear polymer backbone is defined as the process of the addition of electrons to the π system of the linear polymer backbone. Oxidation of the linear polymer backbone is defined as the process of the removal of electrons from the π system of the linear polymer backbone. Reversible oxidation and/or reduction is defined as an oxidation and/or reduction process wherein, when the direction of the reaction is reversed, only the starting materials are recovered, and no new reactions appear.

The polymer exhibits considerable stability in the charged conductive state, i.e., as an electroactive polymer. The term "an electroactive polymer" is used herein as meaning a polymer having or capable of having a conductivity which has been modified with electron acceptor or electron donor dopants to be greater than the electrical conductivity of the virgin or unmodified state of the polymer.

The linear polymer comprises diradical repeat units in the polymer backbone selected from a heterocyclic ring system including at least one Group 5B or Group 6B atom (IUPAC), wherein none of the ring carbon atoms is saturated, a heterocyclic ring system including at least one Group 5B or 6B atom wherein none of the ring carbon atoms is saturated and a connecting unit, and mixtures thereof, wherein said diradical repeat unit in the form of a monomeric repeat unit is capable of undergoing reversible oxidation or reversible reduction or both to form a stable ionic species and wherein said connecting unit in the polymer backbone is a conjugated system or atom or group of atoms which maintain the π orbital overlap with the heterocyclic ring system.

A diradical repeat unit is defined as the smallest structural building block of the polymer backbone having two unsatisfied positions available for linking. These are utilized to propagate the backbone. The diradical repeat units are selected from the group consisting of a heterocyclic ring system, a heterocyclic ring system and a connecting unit, or mixtures thereof. The heterocyclic ring systems include at least one Group 5B or 6B atom (IUPAC System). None of the ring carbon atoms in the heterocyclic ring system is saturated. More specifically, the heteroatoms are selected from the group consisting of N, P, As, Sb, and Bi from the Group 5B atoms and O, S, Se, and Te from the Group 6B atoms. N, O, S are the preferred heteroatoms.

The heteroatoms are distributed among the ring system such that when the ring system is comprised of fused rings, the heteroatoms preferably do not occupy the ring fusion positions. Furthermore, when more than one heteroatom is selected from a mono or fused heterocyclic system, preferably two heteroatoms can be adjacent to one another unless the heteroatoms are both nitrogen in which case no more than two adjacent nitrogens are permitted.

A monomeric repeat unit is defined as a diradical repeat unit wherein the unsatisfied positions are substituted by hydrogen atoms. The monomeric repeat unit must be capable of undergoing reversible oxidation or reversible reduction or both to a stable ionic species. A stable ionic species is defined as a charged atomic or molecular species in the condensed phase which maintains its chemical integrity throughout the course of the chemical process of interest.

A connecting unit is defined as any atom or group of atoms which can link the heterocyclic ring systems together into a polymer chain without adversely effecting the reversible oxidation or reversible reduction of the polymer. The connecting unit must be conjugated or maintain the π orbital overlap with the heterocyclic ring system.

The tractable virgin polymers can be rendered electroactive by subjecting them to reversible electrochemical oxidation or reversible electrochemical reduction reactions. This is accomplished by immersing the virgin polymer in a suitable electrolyte solution and using the polymer as one electrode of an electrochemical cell. It is preferred that the electrolyte solution swell the polymer matrix. Upon passing of an electric current through such a cell, the polymer becomes either partially or fully reduced or oxidized (depending upon the direction of current flow) and charge-compensating cationic or anionic dopants from the supporting electrolyte become incorporated into the polymer. The resulting electroactive polymer is conductive and consists of a charged polymer backbone incorporating charge-compensating ionic dopants. The charges of the polymer and the charge-compensating ionic dopants balance so that the electroactive polymer is electrically neutral. Furthermore, the electrochemical oxidation or reduction proceeds solely by an electron transfer. The charge-compensating anions or cations are associated with the charged polymer backbone but do not chemically react with or modify said backbone.

The electroactive polymer has a conductivity which is greater than the conductivity of the virgin polymer. Preferably, the conductivity is several orders of magnitude greater than that of the virgin polymer.

The process by which the polymer is rendered electroactive can also be used to store charge when the polymer is used as an electrode of a primary or secondary battery. Charge is stored in the identical procedure described above wherein the virgin polymer is either oxidized and reduced to form a charged

polymer backbone with which charge-compensating anionic or cationic dopants are associated. Thus the polymers used in this invention can form either electrode of a battery.

The polymer is a cathode when anode materials are selected which have a more negative redox potential than the polymer, such as lithium, sodium, and the like. The polymer is an anode when cathode materials are selected which have a less negative redox potential than the polymer, such as copper, polypyrrole, and the like. The voltage of the battery is determined by the difference in the individual electrode redox potentials of the electrode materials. Therefore, the anode preferably has a negative reduction potential and cathode has a positive oxidation potential.

Polymers which are reversibly reduceable are known as n-type polymers. These are especially suited for use as anodes. An n-type electroactive organic polymer of this invention is obtained by electrochemically reducing the virgin polymer to a polyanion and incorporating into it charge-neutralizing cations.

Polymers which are reversibly oxidizable are known as p-type polymers. These are especially suited for use as cathodes. A p-type electroactive organic polymer is obtained by electrochemically oxidizing the virgin polymer to a polycation and incorporating into it charge-neutralizing anions.

The polymers as electrodes are stable in their electroactive or charged states because they are composed of diradical repeat units whose monomeric repeat units form stable cations and anions, respectively, upon electrochemical oxidation or reduction. This imparts electrical stability to the battery which is fabricated therefrom.

The energy density of a battery fabricated with these polymers as either electrode or both electrodes can be calculated from the molecular weights of the polymer and the redox potentials of the electrochemically active repeat unit. Batteries which exhibit energy densities of which are greater than 50 watt-hours/kg and preferably greater than 100 watt-hours/kg may be fabricated from the aforementioned polymers.

The electrodes can be closely spaced and fabricated as thin films because the polymers retain their structural and dimensional integrity during the charging and discharging cycles. In contrast, conventional inorganic electrodes require sturdy electrode supports to provide a surface for dissolution and redeposition of the active electrode metal and require larger spacings between the electrodes to avoid short-circuiting of the battery due to uneven growth or dendritic growth of the metallic electrode materials.

The polymer electrodes require only sufficient electrolyte solution to swell the polymers enough so that the diffusion of charge-compensating ionic dopants into and out of the polymer matrix is sufficiently high to sustain a reasonable discharge rate. The electrolyte ions can be present largely in the solid state as a slurry in a minimal volume of a saturated electrolyte solution between the two electrodes. These properties make it possible to achieve energy-density values which exceed those for most conventional battery technologies.

The fact that sturdy electrode supports and large interelectrode spacings are not necessary with these polymer battery electrodes also makes it possible to increase the surface area of the electrodes substantially without adding significantly to the total weight of the battery. This can be accomplished by fabricating a battery from a series of thin electrodes sandwiched together in laminar form. A battery fabricated with a plurality of thin electrodes in multi-layered form has an extremely high-surface area to volume ratio and can attain substantially higher power densities than is possible with conventional battery electrode materials. This feature, combined with the ability to form and shape the tractable polymers into any desired electrode geometry, allows for the design of batteries with very unconventional and useful shapes. For example, such batteries used to power an electric vehicle need not be housed in a large, rectangular trunk space, but could be molded into shapes complementing the contours of the vehicle body.

Brief Description of the Drawing

FIG. 1 illustrates a battery incorporating an electroactive polymer electrode.

Detailed Description of the Invention

The tractable electroactive unsaturated heterocyclic ring system polymers are capable of incorporating ionic conductivity modifiers and said polymers can undergo electrochemical doping and modification. Said polymers are useful as electrode materials in batteries of this invention.

Preferred diradical units forming said linear polymer backbone include:

Suitable fused 6,6,6-membered ring system polymers are fabricated with the diradicals of thianthrenes, phenoxathiins, phenoxazine, N-alkylphenothiazine, dihydrophenazine, dialkyldihydrophenazine, dibenzodioxin, their substituted derivatives and mixtures thereof. The diradicals are connected through the outer carbocyclic rings or a carbocyclic ring and a nitrogen in the central ring. Preferably the diradicals are interspersed with connecting units such as phenylene, vinylene, dithiophenylene and 2,5-(1,3,4-oxadiazolediyl). More specifically, polymers such as poly-2,5-phenoxazine, poly-2,5-(3,7-dimethyl)phenoxazine, poly-2,5-(1,4-phenylene)phenoxazine, poly-3,7-(N-methylphenothiazine)-2,5-(1,3,4-oxadiazole), poly-3,7-(phenoxathiin-4,4′-dithiobiphenylene), and poly-(1,4-dithiophenylene-2,6-thianthrene). These polymers are preferably p-type, i.e., the polymers capable of undergoing reversible oxidation, and are preferred materials for use as cathodes of this invention.

Suitable fused 5,6-membered ring system polymers are fabricated with the diradicals of benzoxazole,

benzothiazole, benzoselenazole, N-alkyl-substituted benzimidazole, their substituted derivatives, and the like. Particular examples are poly-2,2'-(p-phenylene)-1,1'-dimethyl-5,5'-bibenzimidazole, poly-2,2'-(p-phenylene)-5,5'-bibenzoxazole, and poly-2,2'-(p-phenylene)-5,5'-bibenzothiazole. The polymers are capable of undergoing reversible reduction and thus form stable n-type polymers. These polymers are preferred for use as anode materials of this invention. Particularly preferred polymers are poly-2,2'-(p-phenylene)-6,6'-bibenzoxazole, poly-2,2'-(p-phenylene)-1,1'-dimethyl-6,6'-bibenzothiazole, and poly-2,2'-(p-phenylene)-6,6'-bibenzothiazole. These polymers are capable of undergoing a reversible oxidation and reversible reduction, i.e., n-type and p-type characteristics. These polymers are especially preferred for use as either anode materials (i.e., when said polymer is n-type) or cathode materials (i.e., when said polymer is p-type) of this invention. Other preferred polymers are poly-2,2'-(m-phenylene)-6,6'-bibenzoxazole, poly-2,2'-(m-phenylene)-1,1'-dimethyl-6,6'-bibenzimidazole, poly-2,2'-(m-phenylene)-6,6'-bibenzothiazole, and poly-2,2'-(N-methyl-p,p'-aminodiphenylene)-6,6'-bibenzoxazole. These polymers are capable of undergoing reversible oxidation and thus form a stable p-type polymer. These polymers are preferred for use as cathode materials of this invention.

Suitable 5,6,5-membered ring system polymers are fabricated with the diradicals of 1,7-dialkyl-benzo-[1,2-d:4,5-d']diimidazoles, such as 1,7-dimethyl-benzo[1,2-d:4,5-d']diimidazole; benzo[1,2-d:5,4-d']bisthiazole; benzo[1,2-d:4,5-d']bisthiazole; benzo[1,2-d:4,5-d']bisselenazole; benzo[1,2-d:5,4-d']bisselenazole; benzo[1,2-d:4,5-d']bistellurazole; selenazolo[5,4-f]benzothiazole; 1,8-dialkyl-benzo[1,2-d:3,4-d']diimidazoles, such as 1,8-dimethyl-benzo[1,2-d:3,4-d']diimidazole; benzo[1,2-d:5,4-d']bisoxazole; benzo-[1,2-d:4,5-d']bisoxazole; benzo[1,2-d:3,4-d']bisoxazole; benzo[1,2-d:3,4-d']bisthiazole; their substituted derivatives; and mixtures thereof. Examples of such polymers are poly-2,6-(p-phenylene)-benzo[1,2-d:5,4-d']bisoxazole, poly-2,6-(p-phenylene)-1,7-dimethyl-benzo[1,2-d:4,5-d']diimidazole, poly-2,6-(p-phenylene)-benzo[1,2-d:4,5-d']bisthiazole, and poly-2,6-(m-phenylene)benzo[1,2-d:4,5-d']bisthiazole. Preferred polymers exhibit n-type properties.

Suitable monocyclic heterocyclic ring system polymers are comprised from recurring diradicals of triazoles, heterodiazoles such as thiadiazole, oxadiazole, and the like, and heteroazoles such as oxazole and thiazole, all said monocyclic heterocyclic systems incorporating 1,4-phenylene as a connecting unit. Optionally these systems may incorporate other preferred connecting units. Suitable polymers are poly-1,4-phenylene-2,5-(1,3,4-oxadiazole), copolymer of oxadiazole and thiadiazole, poly-1,4-phenylene-2,5-(1,3,4-thiadiazole), poly-4,4'-N-methylaminodiphenylene-2,5-(1,3,4-oxadiazole), poly-1,4-phenylene-2,4-(1,3-thiazole), poly-1,4-phenylene-2,5-(1-phenyl-1,3,4-triazole), and poly-1,4-phenylene-2,5-(1,4-dithiin). Preferred polymers exhibit n-type characteristics. These polymers are preferred for use as anode materials of this invention. With the monocyclic systems, only those compounds whose corresponding monomeric repeat units are able to undergo reversible reduction or reversible oxidation to a stable ionic species are within the scope of the invention. Of course, any of the above mono or fused heterocyclic systems can be substituted with one or more substituents as long as the ring carbon atoms remain unsaturated.

For example, suitable polymers are composed of recurring diradical units of fused, 6,6-membered, nitrogen-containing, heterocyclic ring systems. The fused rings contains from 1 through 6 nitrogen atoms and preferably 1—4 nitrogen atoms. The nitrogen atoms are distributed between the fused rings with 2 or less nitrogens bonded sequentially in a ring and none of the nitrogens occupying the ring fusion positions. These polymers exhibit n-type characteristics and are preferred for use as anode materials of this invention.

Suitable examples of single-nitrogen, fused-ring systems are any of the diradicals of quinoline and isoquinoline. Preferred quinoline polymers exhibit n-type conductivity. Suitable examples of two-nitrogen, fused-ring systems are any of the diradicals of cinnoline; quinazoline; quinoxaline; 2-phenylquinoxaline; phthalazine; 1,5-naphthyridine; 1,6-naphthyridine; 1,7-naphthyridine; 1,8-naphthyridine; 2,6-naphthyridine; copyrine; and the like. Suitable examples of three-nitrogen, fused-ring systems are any of the diradicals of 1,2,4-benzotriazine; pyrido[3,2-d]pyrimidine; pyrido[4,3-d]pyrimidine; pyrido[3,4-d]pyrimidine; pyrido[2,3-d]pyrimidine; pyrido[2,3-b]pyrazine; pyrido[3,4-b]pyrazine; pyrido[2,3-d]pyridazine; pyrido-[3,4-d]pyridazine; and the like. Suitable examples of four-nitrogen, fused-ring systems are any of the diradicals of pyridazino[4,5-c]pyridazine; pyrimido[5,4-d]pyrimidine; pteridine; pyrimido[4,5-d]pyridazine; pyrimido[4,5-d]pyrimidine; pyrazino[2,3-b]pyrazine; pyrazino[2,3-d]pyridazine; pyridazino[4,5-d]pyridazine; pyrimido[4,5-c]pyridazine; pyrazino[2,3-c]pyridazine; pyrido[3,2-d]-as-triazine; pyrido[2,3-e]-as-triazine; and the like. Suitable examples of five-nitrogen, fused-ring systems are any of the diradicals of pyrimido[4,5-e]-as-triazine; pyrimido[5,4-d]-as-triazine; and the like. Suitable examples of six-nitrogen, fused-ring systems are any of the diradicals of as-triazino[6,5-d]-as-triazine; and the like. All the previously mentioned fused, nitrogen-ring systems are known and disclosed in *The Ring Index*, 2nd Edition, and *Supplements I, II and III*, Patterson et al, American Chemical Society. These polymers are preferred for use as anode materials of this invention. The molecules are synthesized into polymers by methods known in the art such as treatment with $ZnCl_2$ or $FeCl_3$ and an alkyliodide, or by dichlorination followed by reaction with appropriately disubstituted molecules such as: disodium sulfide, disodium salt of ethylene glycol, and the like.

The diradicals can be modified with substituents such as electron donating or withdrawing groups by methods known in the art which modify the polymer properties. The diradicals can also be separated by one or more connecting units. Preferred connecting units are phenylene, biphenylene, vinylene, and

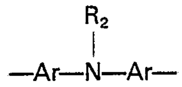

wherein Ar is phenylene or biphenylene and $R_2$ is lower alkyl $C_1$—$C_4$.

Suitable polymers in which the nitrogens of the diradicals are in the ionic form include N-alkyl quinolinium and the like for the above compounds.

The electroactive polymers used in the invention generally have the following formula:

$$\left[ -R-(X)_a-(R')_c-(Y)_b- \right]_n^{(\pm Sd)} \quad [M^{\pm S}]_d$$

where a is either 0 or 1; b is either 0 or 1; c is either 0 or 1; n is an integer between 1 and 20,000; d is an integer between 1 and 40,000; S is an integer 1, 2, or 3; R is either an unsubstituted or substituted heterocyclic diradical ring system; R′ is an identical diradical ring system or different diradical ring system from R; X is a connecting unit comprised of a single atom, or a group of atoms; Y is a connecting unit which is identical to or different from X; and M is an atom or a group of atoms acting as a charge-compensating ion whose electrical charge is opposite to the charge exhibited by the recurring repeat unit:

$$\left[ -R-(X)_a-(R')_c-(Y)_b- \right]_n^{(\pm Sd)}$$

The repeat units form the polyanion or polycation of the electroactive polymer.

The diradical R group is a substituted or unsubstituted heterocyclic systems previously recited. For example, quinoline, isoquinoline, substituted derivatives, or mixtures thereof are preferred. Preferred quinoline polymers have the diradicals connected at the 2,6- and 3,6-positions. Substitution in the 4 position is preferred such as poly-2,6-(4-phenylquinoline). Another preferred polymer is composed of quinoxaline units, substituted quinoxaline, or mixtures thereof.

Optionally, the diradicals can be separated by one or more X or Y connecting units each of which is a conjugated system or an atom or group of atoms which maintains π-orbital overlap with the heterocyclic ring system.

Other connecting units X and Y can be selected from the group comprising:

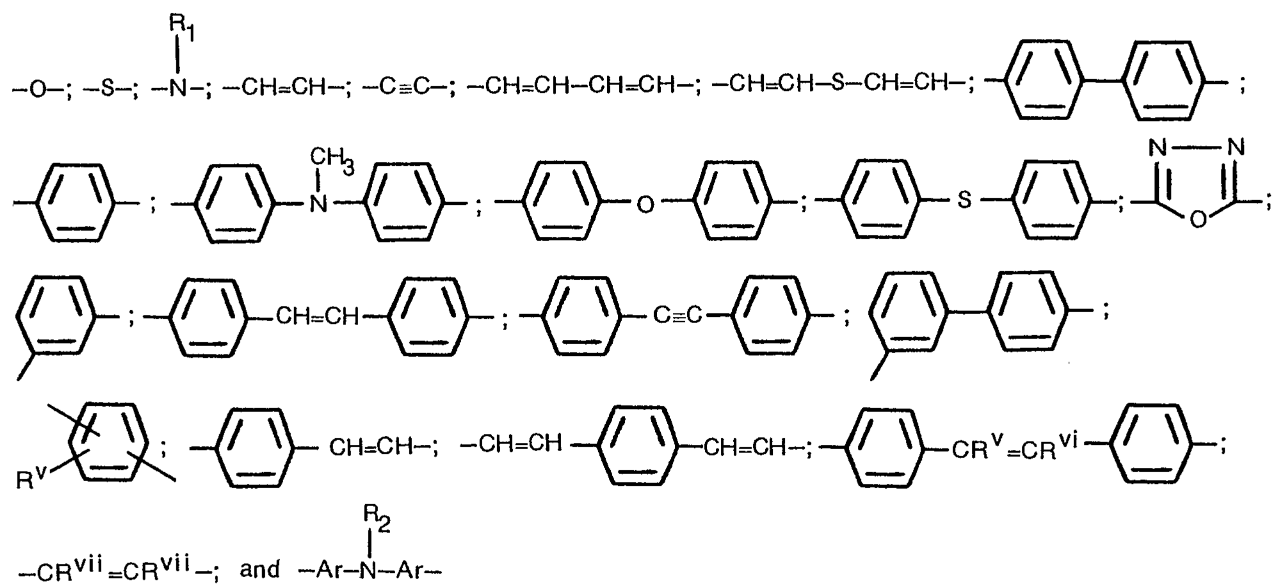

wherein $R_1$ is lower alkyl $C_1$—$C_6$, aryl, and cycloalkyl, and $R^v$, $R^{vi}$ and $R^{vii}$ are H or methyl, methoxy, halogen and mixtures thereof; $R_2$ is lower alkyl $C_1$—$C_4$ and p-substituted phenyl; and Ar is phenylene or biphenylene.

Other suitable connecting units are disclosed above. Preferably, the connecting units are phenylene, —O—, —S—, biphenylene,

—CH=CH—, and 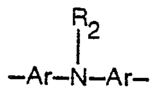 such as 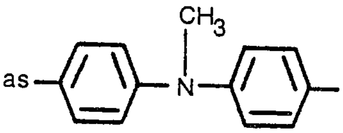 and 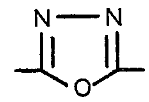 .

The following structures represent preferred electroactive n-type polymers which are substituted and/or incorporated connecting units. These are preferred for use as anode materials of this invention.

A preferred polymer has the formula:

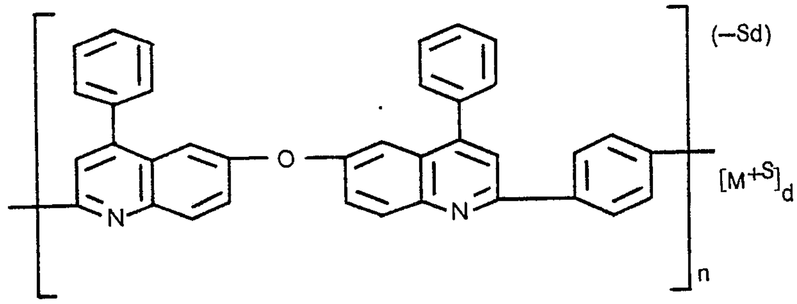

Another preferred polymer has the formula:

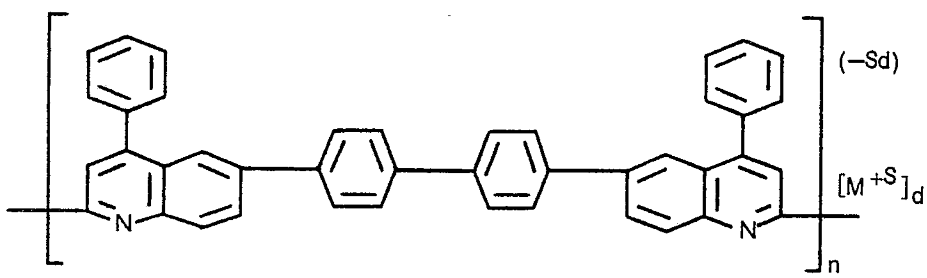

Another preferred polymer has the formula:

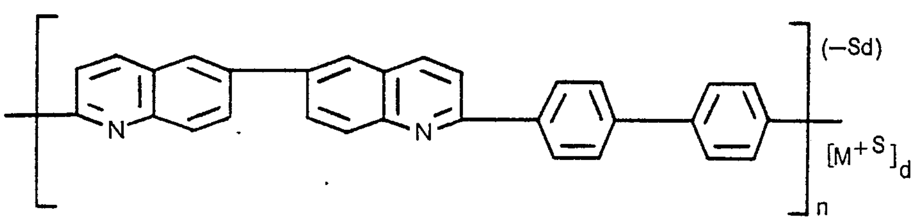

Another preferred polymer has the formula:

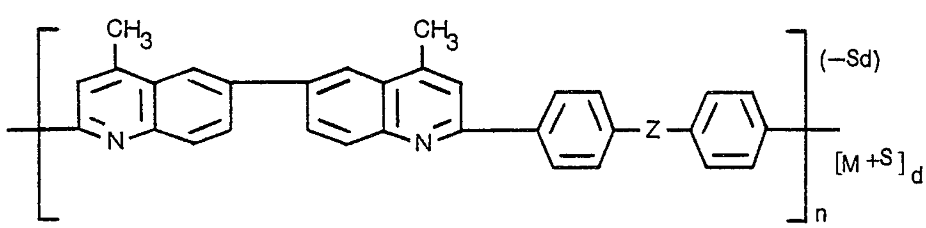

wherein Z is a connecting unit.

Another preferred polymer is obtained when R and R′ are quinoline diradicals with a substituent group $R^{iii}$ in the 4-position selected from the group consisting of H, alkyl of 1 to 4 carbons, alkoxy of 1 to 4 carbon atoms, an alkylthio of 1 to 4 carbon atoms, a cycloaliphatic group of 5 or 6 carbon atoms, an alkenyl group of 2 to 4 carbon atoms, an aryl group of 6 to 10 carbon atoms, an aryl group of 6 to 10 carbon atoms substituted by 1 to 3 alkyl groups of 1 to 4 carbon atoms, alkenyl groups of 2 to 4 carbon atoms, alkynyl groups of 2 to 4 carbon atoms, alkoxy groups of 1 to 4 carbon atoms, 1 to 3 cyano groups, 1 to 3 halogen atoms, dialkyl amino groups of 1 to 4 carbon atoms, an alkylthiol of 1 to 4 carbon atoms, a 5- or 6-member, nitrogen-containing, unsaturated heterocyclic group; and $R^{vii}$ is methyl or H and the polymer has the formula:

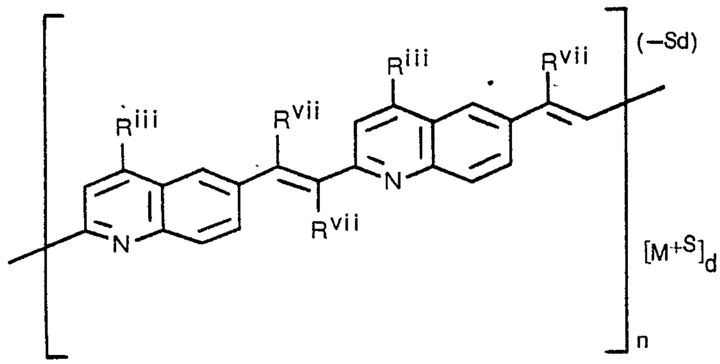

Still another preferred polymer is when $R^{iii}$ is phenyl and $R^{vii}$ is H.

A preferred polymer of poly(phenylquinoxaline) has the formula:

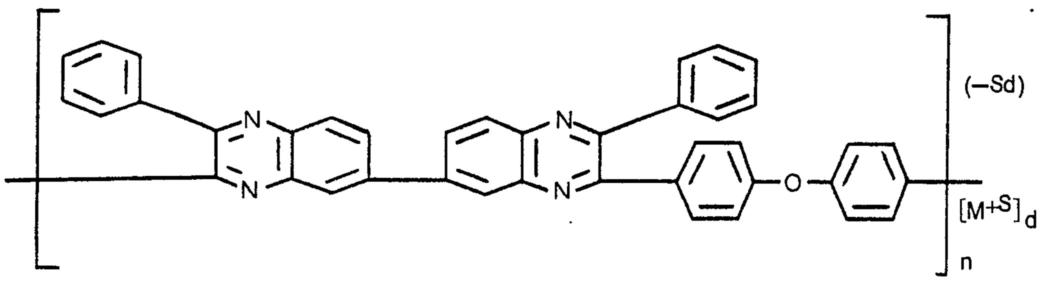

The battery will be more clearly illustrated by referring to FIG. 1. FIG. 1 illustrates a primary or secondary battery 10. The battery 10 has a case 12 which contains the anode 14 and the cathode 16 separated by a separator 18. The battery is charged by reducing the anode and oxidizing the cathode while the electrodes 14 and 16 are immersed in a supporting electrolyte dissolved in a solvent. The supporting electrolyte refers to a salt or other cation-anion couple, dissolved in a suitable solvent. The supporting electrolyte and the solvent are referred to as the electrolyte 20. Wires 24 and 22 connect to the anode 14 and cathode 16, respectively, for charging and discharging the battery 10.

When the electrodes 14 or 16 are fabricated from polymers, the electrodes 14 and 16 are fabricated over or contacting a current collector, not shown, such as a platinum wire or foil, or other suitable low-resistance, conductive material which does not adversely react with the polymer. Materials such as carbon felt, graphite, vitreous carbon, platinum, gold, nickel, and the like are also suitable. Preferably, the current collector has a conductivity of about 100 $ohm^{-1}cm^{-1}$, or greater.

The heterocyclic ring system polymers can be used as either the anode 14 or cathode 16. Preferably, n-type polymers are used as anodes and p-type polymers are used as cathodes. For example, if the anode 14 comprises a polymer such as poly-2,6-quinoline or poly-2,6-(4-phenylquinoline), both being n-type conductive polymers in their electroactive forms, polymers such as poly-2,5-phenoxazine, poly-3,7-(N-methylphenothiazine)-2,5-(1,3,4-oxadiazole), poly-2,2-(m-phenylene)-6,6′-bibenzoxazole, and the like, all being p-type polymers in their electroactive forms, comprise the cathode 16.

Alternatively, the batteries of this invention can comprise p-type heterocyclic polymers as cathodes and alkali metals such as lithium, sodium, and the like as the anode. Other materials whose redox potentials are more negative than the redox potentials of the p-type polymers selected to serve as cathodes, may serve as anodes and thus are also within the scope of the invention.

Another preferred embodiment of this invention comprises the use of n-type heterocyclic polymers as anodes and materials, whose redox potentials are more positive than the redox potentials of the said n-type heterocyclic polymers, can serve as cathodes. Thus, materials such as Ag, Fe, or other polymeric materials such as polyacetylene or polypyrrole can be utilized as cathodes.

Yet another preferred embodiment of this invention regards the use of n-type heterocyclic polymers as

cathodes and materials, whose redox potential is more negative than the redox potential of the said n-type heterocyclic polymers, can serve as anodes. Thus, poly-2,6-(4-phenylquinoline) or poly-2,6-(4-phenyl)-N-methylquinolinium can be the cathodes and alkali metals such as lithium and sodium and the like can be the anodes.

When the anode 14 is preferably fabricated from n-type polymers such as poly-2,6-quinoline, poly-2,6-(4-phenylquinoline), polyquinoxaline, their substituted derivatives, and the like, the anode is charged by electrochemically reducing, i.e., negatively charging, the polyquinoline in the presence of supporting electrolyte cations dissolved in a solvent. The cations associate with the charged polymer. Similarly, when the cathode 16 is fabricated from p-type polymers such as poly-2,5-phenoxazine, poly-3,7-(N-methylphenothiazine)-2,5-(1,3,4-oxadiazole), poly-2,2′-(m-phenylene)-6,6′-bibenzoxazole, their substituted derivatives, and the like, the cathode is charged by electrochemically oxidizing, i.e., positive charging, said polymers in the presence of supporting electrolyte anions dissolved in a solvent. The anions associate with the charged polymer.

Suitable electrolyte cations are selected from cations such as $Li^+$, $Na^+$, $K^+$, $Cs^+$, $Mg^{++}$, $(CH_3)_4N^+$, $(C_2H_5)_4N^+$, $(C_3H_7)_4N^+$, and $(C_4H_9)_4N^+$, and the like as disclosed in French Patent Publication No. 2,505,854, published November 19, 1982. The cation can be any cation, the salt of which can be dissolved in the solvent and will not adversely react with the electrode materials. Suitable electrolyte anions can be $F^-$, $Cl^-$, $Br^-$, $ClO_4^-$, $BF_4^-$, $NO_3^-$, $PF_6^-$, $AsF_6^-$, and the like. Mixtures of salts can be employed.

For example, the charging of a battery containing a polyquinoline (PPQ) anode with the cationic portion of an electrolyte such as tetrabutylammonium-tetrafluoroborate, $[(nBu)_4N^+]$, dissolved in a solvent such as acetonitrile, (Sol.), can be illustrated by the following reaction:

$$PPQ + (nBu)_4N^+ \text{ (Sol.)} + e^- \rightarrow PPQ^-(nBu)_4N^+$$

During discharging of the battery, the anode reaction can be illustrated as follows:

$$PPQ^-(nBu)_4N^+ \rightarrow PPQ + (nBu)_4N^+ \text{ (Sol.)} + e^-$$

In this example, the cathode 16 can be any material which can be oxidized during the charging of the battery and will not adversely react with the anode. Suitable examples of cathode materials include silver coated with a silver halide such as AgBr, AgCl, or AgI; polymers such as polyacetylene, polypyrrole, polyphenylene sulfide, polyphenylene, or poly-1,6-heptadiene; other p-type heterocyclic polymers; or an intercalation compound having a redox potential which is more positive than the redox potential of the anode. An intercalation electrode is defined as an electrode material having a host lattice structure, [Z], which participates in an electrochemical reaction via an intercalation mechanism to yield an intercalation compound:

$$\underset{\text{Electrolyte}}{nM^+} + ne^- + \underset{\text{Electrode Material}}{[Z]} \rightleftharpoons \underset{\text{Intercalation Compound}}{[M_xZ]}$$

or

$$\underset{\text{Electrolyte}}{nX^-} + \underset{\text{Electrode Material}}{[Z]} \rightleftharpoons [X_nZ] + ne^-$$

$Li_xTiS_2$ is an example of a suitable intercalation compound cathode material. $Li_xTiS_2$ has a reported redox potential of about −0.8 volts.

Additional examples of intercalation compounds are the chalcogenides of Group IV—B such as $TiS_2$, $TiSe_2$; Group V—B metals such as $V_2S_5$, $V_2Se_{4.5}$, $(NH_4)_3VS_4$; Group VI—B metals such as $(NH_4)_2MoSe_2$; and Group VIII metals such as FeS, $FeS_2$, CoS, $CoS_2$, NiS, $NiS_2$; and the like.

The cathode can also be a salt form of the polymer or an N-alkylated form of the polymer such as poly-2,6-(4-phenyl)-N-methylquinolinum with an anion. Suitable ions are $Cl^-$, $Br^-$, $F^-$, $I^-$, $BF_4^-$, $ClO_4^-$, $PF_6^-$, $AsF_6^-$, $NO_3^-$, and the like.

In a preferred embodiment, the cathode can be a polypyrrole material, $PP_y$, as taught by A. F. Diaz, *J. C. S. Chem. Com.,* 1979, pp. 635—636. Most preferably, the cathodes are any p-type heterocyclic polymers previously recited. If the cathode is polypyrrole (PPy) with an electrolyte solvent of acetonitrile with the supporting electrolyte of tetrabutylammonium-tetrafluoroborate dissolved therein, the charging of the $PP_y$ in the battery is illustrated as follows:

$$PP_y + BF_4^- \text{ (Sol.)} \rightarrow PP_y^+BF_4^- + e^-$$

The overall charge and discharge reaction of the secondary battery is illustrated as follows:

$$PPQ + (nBu)_4NBF_4 + PP_y \underset{\text{Discharge}}{\overset{\text{Charge}}{\rightleftharpoons}} PPQ^-(nBu)_4N^+ + PP_y{}^+BF_4{}^-$$

For the previous illustrations of the battery, the separator 18 need only prohibit electrical shorting between the anode and cathode. A suitable example would be a fine-mesh nylon grid. Any separator can be used in the invention so long as it is an electrical insulator and is not soluble in the electrolyte solution and does not prevent the free flow of ions. Another example would be a teflon grid. Alternatively, the separator must be an ion-selective membrane if a supporting electrolyte or counter electrode is selected which chemically reacts with the polymer electrode. The ion-selective separation would divide the battery 10 into an anode compartment and a cathode compartment. For example, an ion-selective separator is required when the anode is PPQ and the cathode is Ag, Fe, Cu, Zn, Pd, Sn, or other metal which could plate out onto the anode.

The solvent portion of electrolyte 20 can comprise any liquid which dissolves the supporting electrolyte into its ionic form. Suitable solvents can be any material which would not dissolve the electrode, case, or separator such as acetonitrile, propylene carbonate, tetrahydrofuran, propionitrile, butyronitrile, phenylacetonitrile, dimethylformamide, dimethoxyethane, dimethylsulfoxide, pyridine, or mixtures thereof, and the like. Any gelling agents known in the art which are suitable for increasing the viscosity of the supporting electrolyte without inhibiting the dissociation of the supporting electrolyte or movement of ions therethrough are suitable, for example, starch, guar gum, and the like.

The output voltage of the battery is determined by the difference between the redox potential of the anode material and the redox potential of the cathode material. For example, poly-2,6-(4-phenylquinoline) reduces at a potential of about −2 volts vs. the Standard Calomel Electrode (SCE), i.e., a redox potential of about −2.0 volts. Polypyrrole oxidizes at a potential of about 0 volts vs. SCE. If a single-cell battery is constructed using these two polymers as the anode and cathode, respectively, a nylon mesh grid separator between the electrodes, and an electrolyte solution of tetraethylammonium-tetrafluoroborate dissolved in acetonitrile, then the output voltage of the resulting cell is about 2 volts. This compares to the voltage of a single-cell lead/lead oxide-acid battery. The series connection of 6 cells of the battery would provide a standard 12-volt system as used in automobiles and the like. Any number of cells could be connected in parallel to obtain the necessary and desired output current.

In an alternative embodiment of the invention, the polymer is paired with an electrode material having a more negative redox potential than the polymer. In this type of a battery, the polymer functions as a cathode. Suitable materials with more negative redox potentials which can function as the anode are metals such as Li, Na, K, Rb, Cs, or an alloy thereof. The anode can also be an intercalation compound having a more negative redox potential than the polymer cathode such as $Li_xWO_2$. $Li_xWO_2$ has a redox potential of about −2.5 volts.

For example, a battery can be fabricated with a PPQ cathode and Li anode. During discharging of the battery, the PPQ cathode is reduced, i.e., negatively charged, and doped with the cationic portion of a lithium-containing electrolyte salt, such as lithium perchlorate dissolved in propylene carbonate. The lithium anode is electrochemically oxidized. The cathode can be electrochemically oxidized, i.e., positively charged, and doped with the anionic portion of a lithium-containing electrolyte salt such as lithium perchlorate dissolved in propylene carbonate. During discharging, the cathode reaction can be illustrated as follows:

$$PPQ + e^- + Li^+ \text{ (Sol.)} \rightarrow PPQ^-Li^+$$

The anode reaction can be illustrated as follows:

$$Li \rightarrow Li^+ \text{ (Sol.)} + e^-$$

The overall reaction can be illustrated as follows:

$$PPQ + Li \underset{\text{Charging}}{\overset{\text{Discharging}}{\rightleftharpoons}} PPQ^- + Li^+$$

The use of the previously recited heterocyclic polymers in the construction of the anode and/or cathode represents a significant improvement in the electrochemical stability of the resulting battery over that attained with polyacetylene and other conductive polymer materials reported to date. The distinguishing feature of polymers of this invention which provides for this improvement is the fact that they are composed of diradical repeat units, whose corresponding monomeric repeat unit form stable cations or anions, respectively, upon reversible electrochemical oxidation or reduction. As a result of the electrochemical stability, the battery can undergo repeated deep discharging. Furthermore, the battery exhibits an extremely high discharging rate corresponding to a peak power density of about 12 kw/lb. In addition, the depth of discharge and charge is almost 100%. In 60 cycles of deep charging and discharging,

the battery exhibits no appreciable change in its characteristics.

The battery is not limited to the construction illustrated in the figure. The battery may be fabricated in a cylindrical shape wherein alternating layers of polyquinoline anode, a separator incorporating an electrolyte, a cathode such as poly-2,2′-(m-phenylene)-bibenzoxazole, are rolled in a spiral configuration, as seen from a cross-section, and are tubular in length. Any number of alternating layers of anode and cathode materials separated by a separator can be employed to increase the charge storage capacity and power output of the battery.

Having described the electrolytes, the battery and the methods of fabrication of the battery, the following examples are intended to be illustrative of the invention and not meant to limit the scope thereof. Modification which would be obvious to one of ordinary skill in the art is contemplated to be within the scope of the invention.

## EXAMPLES

### Example 1

A platinum/poly-2,6-(4-phenylquinoline)/tetrabutylammonium-bromide, acetonitrile/silver bromide/silver battery was fabricated in which the poly-2,6-(4-phenylquinoline) served as the anode material and the silver/silver bromide as the cathode material. A 10 cm length of silver wire was anodized in an acetonitrile solution of $Bu_4NBr$, passing about 20 coulombs of charge to form an AgBr layer. A platinum wire was coated with a thin film of poly-2,6-(4-phenylquinoline) by immersing the wire in 5% meta-cresol/$P_2O_5$ solution of the polymer, followed by a neutralization in an ethanol/triethylamine bath. The resulting film was a few microns in thickness. The two electrodes were immersed in a one-molar solution of $Bu_4NBr$ in acetonitrile and arranged so as to not touch each other. The cell was charged by connecting the electrodes to a 2.7-volt dry cell for a few minutes. The resulting battery exhibited an open-circuit voltage of 0.75 volts and a short-circuit current of 340 microamps, corresponding to a current density of 3.5 milliamps per square centimeter.

### Example 2

A platinum/poly-2,6-(4-phenylquinoline)/tetraethylammonium-tetrafluoroborate, acetonitrile/polypyrrole/platinum battery was fabricated in which the poly-2,6-(4-phenylquinoline) served as the anode material and the polypyrrole as the cathode material. A polypyrrole film was electrodeposited on a 10 $cm^2$ area platinum-foil electrode according to the published procedures of A. F. Diaz, *J. C. S. Chem. Com.*, 1979, pp. 635—636. A film of poly-2,6-(4-phenylquinoline) was cast on a second platinum-foil electrode in the same manner as described in Example 1. These two electrodes were immersed in a 0.5-molar solution of tetraethylammonium-tetrafluoroborate in acetonitrile. The electrodes were separated with a nylon mesh. The cell was charged with a 2.7-volt dry cell in a period of a few minutes. The resulting battery exhibited an open-circuit voltage of 2 volts and a short-circuit current of 250 milliamps, corresponding to a current density of about 12 milliamps per square centimeter. The discharged battery was recharged by connecting it to an external 2.7-volt dry cell for a period of a few minutes. Over 100 charge-discharge cycles were performed in this manner with no change in open-circuit voltage, short-circuit current or battery capacity.

### Example 3

A lithium/lithium perchlorate, propylene carbonate/poly-2,6-(4-phenylquinoline)/platinum battery was fabricated in which the poly-2,6-(4-phenylquinoline) served as the cathode material and the lithium served as the anode material. A lithium anode was prepared by electrodepositing a fresh lithium coating onto a 20 $cm^2$ platinum-foil electrode from a solution of $LiClO_4$ in propylene carbonate, passing a total of −58 coulombs of charge. A similar platinum-foil electrode was coated with a thin film of poly-2,6-(4-phenylquinoline) as in Example 1. The battery was assembled by immersing the two electrodes face to face in a solution of $LiClO_4$ in propylene carbonate and separating them with a nylon mesh screen to avoid shorting. The open-circuit voltage of the battery was 2.37 volts with a short-circuit current of 95 milliamps corresponding to a current density of 5 milliamps per square centimeter. The discharged battery was recharged by connecting it to an external 2.7-volt dry cell for a period of about one minute. Subsequent charge-discharge cycles were carried out with similar results, but showing a gradual lowering of the capacity of the battery.

### Example 4

A carbon/poly-2,6-(4-phenylquinoline)/tetraethylammonium-tetrafluoroborate, acetonitrile/poly-2,5-phenoxazine/carbon battery was fabricated in which the poly-2,6-(4-phenylquinoline) served as the active anode material and the poly-2,5-phenoxazine served as the active cathode material. A reticulated vitreous carbon block was coated with poly-2,6-(4-phenylquinoline) by immersion in a 5% meta-cresol/$P_2O_5$ solution of the polymer, followed by neutralization in an ethanol/triethylamine bath. A second reticulated vitreous carbon block was coated with the phenoxazine polymer by electrochemically oxidizing a THF solution of the polymer, resulting in an electrodeposited oxidized poly-2,5-phenoxazine film. The electrode was then rinsed with THF and dried in an inert atmosphere. The electrode was then immersed in a 0.1-molar solution of tetraethylammonium-tetrafluoroborate in acetonitrile and electrochemically reduced to yield a neutralized vitreous carbon electrode coated with a thin film of neutral poly-2,5-phenoxazine. The two

coated carbon anode and cathode electrodes were immersed in a 0.5-molar tetraethylammonium-tetrafluoroborate solution in acetonitrile and separated with a thin nylon mesh. The battery was charged with two 1.5-volt dry cells to give an open-circuit voltage of 3.0 volts at full charge. The short-circuit discharge of this cell showed a current plateau of about 125 milliamps for most of the discharge, followed by a precipitous drop in the current near full discharge. The cell was then recharged with the dry cells, yielding a 3.0-volt open-circuit voltage and an identical response upon short-circuit discharge. Repeated charge/discharge cycles showed no change in this short-circuit discharge curve, cell capacity, or in the open-circuit voltage. This battery exhibited greater than 95% coulomb efficiency (i.e., greater than 95% of the charge injected was recovered during discharge).

Example 5

A platinum/poly-2,6-(4-phenylquinoline)/tetraethylammonium-tetrafluoroborate, acetonitrile/poly[2,6-(N-methyl-4-phenyl)quinolinium]/platinum battery was fabricated in which the poly-2,6-(4-phenylquinoline) served as the active anode material and the poly-[2,6-(N-methyl-4-phenyl)quinolinium] served as the active cathode material. Two platinum wires were coated with poly-2,6-(4-phenylquinoline) as described in Example 1. One of these wires was treated with boiling dimethylsulfate for 10 minutes to quarternize the nitrogen, resulting in a platinum wire coated with a film of the quinolinium polymer. Both coated wire anode and cathode were immersed in a 0.1-molar solution of tetraethylammonium-tetrafluoroborate in acetonitrile. The poly-2,6-(4-phenylquinoline) coated wire was connected to a three-electrode potentiostat and reduced at −1.8 volts vs. SCE with the aid of a platinum auxiliary electrode. The reference and auxiliary electrodes were removed from the solution so that only the two polymer-coated wires remained. The charged battery thus assembled exhibited an open-circuit voltage of 1.0 volts. The cell was then discharged at short circuit, and subsequently recharged with a 1.2-volt dry cell. The battery was charged and discharged in this way several times yielding an open-circuit voltage of 1.0 volts each time. The coulomb efficiency of the charge/discharge process was 80%. Within experimental error, the battery was repeatedly recharged to 100% of its initial capacity.

Example 6

A platinum/poly-2,2′-(p-phenylene)-6,6′-bibenzoxazole/tetraethylammonium-tetrafluoroborate, acetonitrile/poly-2,5-phenoxazine/platinum battery was fabricated in which the poly-2,2′-(p-phenylene)-6,6′-bibenzoxazole served as the active anode material, and the poly-2,5-phenoxazine served as the active cathode material. A platinum wire was coated with a thin film of the bibenzoxazole polymer by immersing the wire in a 5% methanesulfonic acid solution of the polymer, followed by neutralization in an ethanol/triethylamine bath. A 1 square centimeter platinum flag was coated with a thin film of poly-2,5-phenoxazine by electrochemically oxidizing a solution of the polymer in tetrahydrofuran, resulting in an oxidized, electrodeposited film. This electrode was then rinsed in tetrahydrofuran and dried in an inert atmosphere. The electrode was then immersed in a 0.1-molar solution of tetraethylammonium-tetrafluoroborate in acetonitrile and electrochemically reduced to yield a platinum flag coated with a neutral film of poly-2,5-phenoxazine. The bibenzoxazole polymer-coated wire anode and the phenoxazine polymer-coated platinum flag cathode were both immersed in a 0.1-molar solution of tetraethylammonium-tetrafluoroborate in acetonitrile. The resulting battery was charged with a 3.5-volt dry cell. The charged battery exhibited an open-circuit voltage of 3.0 volts. The cell was then discharged at short circuit and subsequently recharged. The battery was charged and discharged in this way several times yielding an open-circuit voltage of 3.0 volts each time. The coulomb efficiency of the charge/discharge process was 80%. Within experimental error, the battery was repeatedly recharged to 100% of its initial capacity.

Example 7

A platinum/poly-2,6-(p-phenylene)-benzo[1,2-d:5,4-d′]bisoxazole/tetraethylammonium-tetrafluoroborate, acetonitrile/poly-2,5-phenoxazine/platinum battery was fabricated in which the benzobisoxazole polymer served as the active anode material, and the phenoxazine polymer served as the active cathode material. A platinum wire was coated with a thin film of the benzobisoxazole polymer by immersing the wire in a 5% methanesulfonic acid solution of the polymer, followed by neutralization in an ethanol/triethylamine bath. A 1 square centimeter platinum flag was coated with a thin film of poly-2,5-phenoxazine by electrochemically oxidizing a solution of the polymer in tetrahydrofuran, resulting in an oxidized, electrodeposited film. This electrode was then rinsed in tetrahydrofuran and dried in an inert atmosphere. The electrode was then immersed in a 0.1-molar solution of tetraethylammonium-tetrafluoroborate in acetonitrile and electrochemically reduced to yield a platinum flag coated with a neutral film of poly-2,5-phenoxazine. The benzo-bisoxazole polymer-coated anode wire and the phenoxazine polymer-coated cathode platinum flag were both immersed in a 0.1-molar solution of tetraethylammonium-tetrafluoroborate in acetonitrile. The resulting battery was charged with a 3.5-volt dry cell. The charged battery exhibited an open-circuit voltage of 3.1 volts. The cell was then discharged at short circuit and subsequently recharged. The battery was charged and discharged in this way several times yielding an open-circuit voltage of 3.1 volts each time. Within experimental error, the battery was repeatedly recharged to 65% of its initial capacity.

Example 8

A platinum/poly-2,6-(p-phenylene)-benzo[1,2-d:4,5-d']bisthiazole/tetraethylammonium-tetrafluoroborate, acetonitrile/poly-2,5-phenoxazine/platinum battery was fabricated in which the benzobisthiazole polymer served as the active anode material, and the phenoxazine polymer served as the active cathode material. A platinum wire was coated with a thin film of the benzobisthiazole polymer by immersing the wire in a 5% methanesulfonic acid solution of the polymer, followed by neutralization in an ethanol/triethylamine bath. A 1 square centimeter platinum flag was coated with a thin film of poly-2,5-phenoxazine by electrochemically oxidizing a solution of the polymer in tetrahydrofuran, resulting in an oxidized, electrodeposited film. This electrode was then rinsed in tetrahydrofuran and dried in an inert atmosphere. The electrode was then immersed in a 0.1-molar solution of tetraethylammonium-tetrafluoroborate in acetonitrile and electrochemically reduced to yield a platinum flag coated with a neutral film of polyphenoxazine. The benzobisthiazole polymer-coated wire anode and the phenoxazine polymer-coated platinum flag cathode were both immersed in a 0.1-molar solution of tetraethylammonium-tetrafluoroborate in acetonitrile. The resulting battery was charged with a 3.5-volt dry cell. The charged battery exhibited an open-circuit voltage of 3.4 volts. The cell was then discharged at short circuit and subsequently recharged. The battery was charged and discharged in this way several times yielding an open-circuit voltage of 3.4 volts each time. Within experimental error, the battery was repeatedly recharged to 97% of its initial capacity.

Example 9

A platinum/poly-p-phenylene-2,5-(1,3,4-oxadiazole/tetraethylammonium-tetrafluoroborate, acetonitrile/poly-2,5-phenoxazine/platinum battery was fabricated in which the poly-p-phenylene-2,5-(1,3,4-oxadiazole) served as the active anode material, and the poly-2,5-phenoxazine served as the active cathode material. A platinum wire was coated with a thin film of poly-p-phenylene-2,5-(1,3,4-oxadiazole) by immersing the wire in a 5% sulfuric acid solution of the polymer, followed by neutralization in an ethanol/triethylamine bath. A 1 square centimeter platinum flag was coated with a thin film of poly-2,5-phenoxazine by electrochemically oxidizing a solution of the polymer in tetrahydrofuran, resulting in an oxidized, electrodeposited film. This electrode was then rinsed in tetrahydrofuran and dried in an inert atmosphere. The electrode was then immersed in a 0.1-molar solution of tetraethylammonium-tetrafluoroborate in acetonitrile and electrochemically reduced to yield a platinum flag coated with a neutral film of poly-2,5-phenoxazine. The oxadiazole polymer-coated wire anode and the phenoxazine polymer-coated platinum flag cathode were both immersed in a 0.1-molar solution of tetraethylammonium-tetrafluoroborate in acetonitrile. The resulting battery was charged with a 3.5-volt dry cell. The charged battery exhibited an open-circuit voltage of 3.4 volts. The cell was then discharged at short circuit and subsequently recharged. The battery was charged and discharged in this way several times yielding an open-circuit voltage of 3.4 volts each time. Within experimental error, the battery was repeatedly recharged to 99% of its initial capacity.

Example 10

A platinum/poly-2,6-(p-phenylene)-benzo[1,2-d:4,5-d']bisthiazole/tetraethylammonium-tetrafluoroborate, acetonitrile/poly-2,2'-(m-phenylene)-6,6'-bibenzoxazole/platinum battery was fabricated in which the benzobisthiazole polymer served as the active anode material, and the poly-2,2'-(m-phenylene)-6,6'-bibenzoxazole served as the active cathode material. A platinum wire was coated with a thin film of the benzobisthiazole polymer by immersing the wire in a 5% methanesulfonic acid solution of the polymer, followed by neutralization in an ethanol/triethylamine bath. A second platinum wire was coated with a thin film of the bibenzoxazole polymer in a similar manner. The benzobisthiazole polymer-coated wire anode and bibenzoxazole polymer-coated wire cathode were immersed in a 0.1-molar solution of tetraethylammonium-tetrafluoroborate in acetonitrile. The resulting battery was charged with a 4.2-volt dry cell. The charged battery exhibited an open-circuit voltage of 4.0 volts. The cell was then discharged at short circuit and subsequently recharged. The battery was charged and discharged in this way several times yielding an open-circuit voltage of 4.0 volts each time.

Example 11

A platinum/poly-2,6-(4-phenylquinoline)/tetraethylammonium-tetrafluoroborate, acetonitrile/poly-2,2'-(m-phenylene)-6,6'-bibenzoxazole/platinum battery was fabricated in which the poly-2,6-(4-phenylquinoline) polymer served as the active anode material, and the bibenzoxazole polymer served as the active cathode material. A platinum wire was coated with a thin film of poly-2,6-(4-phenylquinoline) by immersing the wire in a 5% meta-cresol/$P_2O_5$ solution of the polymer, followed by neutralization in an ethanol/triethylamine bath. A second platinum wire was coated with a thin film of the bibenzoxazole polymer in the manner described in Example 6. The quinoline polymer-coated wire anode and the bibenzoxazole polymer-coated wire cathode were immersed in a 0.1-molar solution of tetraethylammonium-tetrafluoroborate in acetonitrile. The resulting battery was charged with a 4.2-volt dry cell. The charged battery exhibited an open-circuit voltage of 3.8 volts. The cell was then discharged at short circuit and subsequently recharged. The battery was charged and discharged in this way several times yielding an open-circuit voltage of 3.8 volts each time.

Example 12

A platinum/poly-p-phenylene-2,5-(1,3,4-oxadiazole/tetraethylammonium-tetrafluoroborate, acetonitrile/poly(N-methylphenothiazine)-2,5-(1,3,4-oxadiazole)/platinum battery was fabricated in which the poly-p-phenylene-2,5-(1,3,4-oxadiazole) served as the active anode material, and the poly(N-methylphenothiazine)-2,5-(1,3,4-oxadiazole) served as the active cathode material. A platinum wire was coated with a thin film of poly-p-phenylene-2,5-(1,3,4-oxadiazole) by immersing the wire in a 5% sulfuric acid solution of the polymer, followed by neutralization in an ethanol/triethylamine bath. A second platinum wire was coated with a thin film of poly(N-methylphenothiazine)-2,5-(1,3,4-oxadiazole) in a similar manner. Both polymer-coated wire anode and cathode were immersed in a 0.1-molar solution of tetraethylammonium-tetrafluoroborate in acetonitrile. The resulting battery was charged with a 3.0-volt dry cell. The charged battery exhibited an open-circuit voltage of 2.7 volts. The cell was then discharged at short circuit and subsequently recharged. The battery was charged and discharged in this way several times yielding an open-circuit voltage of 2.7 volts each time.

Example 13

A platinum/poly-p-phenylene-2,5-(1,3,4-oxadiazole)-p-phenylene-2,5-(1,3,4-thiadiazole) copolymer/tetraethylammonium-tetrafluoroborate, acetonitrile/poly-2,2′-(m-phenylene)-6,6′-bibenzoxazole/platinum battery was fabricated in which the poly-p-phenylene-2,5-(1,3,4-oxadiazole)-p-phenylene-2,5-(1,3,4-thiadiazole) copolymer served as the active anode material, and the bibenzoxazole polymer served as the active cathode material. A platinum wire was coated with a thin film of the copolymer by immersing the wire in a 5% msulfuric acid solution of the polymer, followed by neutralization in an ethanol/triethylamine bath. A second platinum wire was coated with a thin film of the bibenzoxazole polymer in the manner described in Example 10. Both polymer-coated wire anode and cathode were immersed in a 0.1-molar solution of tetraethylammonium-tetrafluoroborate in acetonitrile. The resulting battery was charged with a 4.0-volt dry cell. The charged battery exhibited an open-circuit voltage of 3.5 volts. The cell was then discharged at short circuit and subsequently recharged. The battery was charged and discharged in this way several times yielding an open-circuit voltage of 3.5 volts each time.

Example 14

A platinum/poly-2,6-(4-phenylquinoline)/tetraethylammonium-tetrafluoroborate, acetonitrile/poly-2,2′-(p-phenylene)-6,6′-bibenzoxazole/platinum battery was fabricated in which the poly-2,6-(4-phenylquinoline) served as the active anode material, and the poly-2,2′-(p-phenylene)-6,6′-bibenzoxazole served as the active cathode material. A platinum wire was coacted with a thin film of poly-2,6-(4-phenylquinoline) by immersing the wire in a 5% meta-cresol/$P_2O_5$ solution of the polymer, followed by neutralization in an ethanol/triethylamine bath. A second platinum wire was coated with a thin film of the bibenzoxazole polymer in the manner described in Example 6. Both polymer-coated wire anode and cathode were immersed in a 0.1-molar solution of tetraethylammonium- tetrafluoroborate in acetonitrile. The resulting battery was charged with a 3.5-volt dry cell. The charged battery exhibited an open-circuit voltage of 3.1 volts. The cell was then discharged at short circuit and subsequently recharged. The battery was charged and discharged in this way several times yielding an open-circuit voltage of 3.1 volts each time. The coulomb efficiency of the charge/discharge process was 30%. Within experimental error, the battery was repeatedly recharged to 30% of its initial capacity.

Example 15

A platinum/poly-2,2′-(p-phenylene)-6,6′-bibenzoxazole/tetraethylammonium-tetrafluoroborate, acetonitrile/poly-2,2′-(p-phenylene)-6,6′-bibenzoxazole/platinum battery was fabricated in which the poly-2,2′-(p-phenylene)-6,6-bibenzoxazole served as both the active anode material and the active cathode material. Two platinum wires were coated with a thin film of the bibenzoxazole polymer by immersing the wires in a 5% methanesulfonic acid solution of the polymer, followed by neutralization in an ethanol/triethylamine bath. Both polymer-coated wire anode and cathode were immersed in a 0.1-molar solution of tetraethylammonium-tetrafluoroborate in acetonitrile. The resulting battery was charged with a 3.5-volt dry cell. The charged battery exhibited an open-circuit voltage of 3.3 volts. The cell was then discharged at short circuit and subsequently recharged. The battery was charged and discharged in this way several times yielding an open-circuit voltage of 3.3 volts each time. The coulomb efficiency of the charge/discharge process was 30%. Within experimental error, the battery was repeatedly recharged to 40% of its initial capacity.

**Claims**

1. A battery electrode comprising a current collector and, as the active material of the electrode, a stable electro-conductive linear tractable unsaturated polymer obtained by incorporating charge-compensating ionic dopants into a linear unsaturated polymer which is capable of undergoing reversible oxidation or reversible reduction and which can be formed into a desired electrode shape, said polymer comprising unsaturated diradical repeat units in the polymer backbone selected from a heterocyclic ring system including at least one Group 5B or Group 6B atom, wherein none of the ring carbon atoms is saturated, a heterocyclic ring system including at least one Group 5B or Group 6B atom wherein none of

the ring carbon atoms is saturated and a connecting unit, and mixtures thereof, wherein said unsaturated diradical repeat unit in the form of a monomeric repeat unit is capable of repeatedly undergoing reversible oxidation and reversible reduction respectively to form a stable ionic species and wherein said connecting unit in the polymer backbone is a conjugated system or atom or group of atoms which maintains π-orbital overlap with the heterocyclic ring system.

2. A battery electrode according to Claim 1, wherein sid Group 5B or 6B heteroatom is selected from N, P, As, O, S, Se, Te and mixtures thereof and none of the heteroatoms occupies ring fusion positions and the P, As, O, S, Se and Te atoms do not occupy adjacent ring positions.

3. A battery electrode according to Claim 2, wherein said heteroatom is selected from N, S, O, and mixtures thereof.

4. A battery electrode according to Claim 2, wherein the diradicals are positional diradicals selected from thianthrenes; phenoxathiins; phenoxazine; N-alkylphenothiazine; dihydrophenazine, dialkyldihydrophenazine; dibenzodioxin; benzoxazole; benzothiazole; benzoselenazole; N-alkyl-substituted benzimidazole; 1,7-dimethylbenzo[1,2-d:4,5-d']diimidazole; benzo[1,2-d:5,4-d']bisthiazole; benzo[1,2-d:4,5-d']bisthiazole; benzo[1,2-d:4,5-d']bis-selenazole; benzo[1,2-d:5,4-d']bis-selenazole; benzo[1,2-d:4,5-d']bistellurazole; selenazole[5,4-f]benzothiazole; 1,8-dialkyl-benzo[1,2-d:3,4-d']diimidazole; benzo[1,2-d:5,4-d']bisoxazole; benzo[1,2-d:4,5-d']bisoxazole; benzo[1,2-d:3,4-d']bisoxazole; benzo[1,2-d:3,4-d']-bisthiazole; triazole and 1,4-phenylene; thiadzole and 1,4-phenylene; oxadiazole and 1,4-phenylene; oxazole and 1,4-phenylene; thiazole and 1,4-phenylene; cinnoline; quinazoline; quinoxaline; 2-phenylquinoxaline; 4-phenylquinoline; phthalazine; 1,5-naphthyridine; 1,6-naphthyridine; 1,7-naphthyridine; 1,8-naphthyridine; 2,6-naphthyridine; copyrine; 1,2,4-benzotriazine; pyrido[3,2-d]pyrimidine; pyrido[4,3-d]-pyrimidine; pyrido[3,4-d]pyrimidine; pyrido[2,3-d]pyrimidine; pyrido[2,3-b]pyrazine, pyrido[3,4-b]-pyrazine; pyrido[2,3-d]pyridazine, pyrido[3,4-d]pyridazine; pyridazino[4,5-c]pyridazine; pyrimido[5,4-d]-pyrimidine; pteridine; pyrimido(4,5-d]pyridazine; pyrimido[4,5-d]pyrimidine; pyrazino[2,3-b]pyrazine; pyrazino[2,3-d]pyridazine; pyridazino[4,5-d]pyridazine; pyrimido[4,5-c]pyridazine; pyrazino[2,3-c]-pyridazine; pyrido[3,2-d]-as-triazine; pyrimido[4,5-e]-as-triazine; pyrido[2,3-e)-as-triazine, and as-triazino-[6,5-d]-as-triazine; and mixtures of these diradicals.

5. A battery electrode according to Claim 4, wherein the electroactive polymer is selected from poly-2,2'-(p-phenylene)-1,1'-dimethyl-5,5'-bibenzimidazole; poly-2,2'-(p-phenylene)-5,5'-bibenzoxazole; poly-2,2'-(p-phenylene)-5,5'-bibenzothiazole; poly-2,6-(p-phenylene)-benzo[1,2-d:5,4-d']bisoxazole; poly-2,6-(p-phenylene)-1,7-dimethyl-benzo[1,2-d:4,5-d']diimidazole; poly-2,6-(p-phenylene)-benzo[1,2-d:4,5-d']-bisthiazole; poly-2,6-(m-phenylene)benzo[1,2-d:4,5-d']bisthiazole; poly-1,4-phenylene-2,5-(1,3,4-oxadiazole); copolymer of oxadiazole and thiadiazole with 1,4-phenylene connecting units; copolymer of oxadiazole and thiadiazole; poly-1,4-phenylene-2,5-(1,3,4-thiadiazole); poly-1,4-phenylene-2,4-(1,3-thiazole); poly-1,4-phenylene-2,5-(1-phenyl-1,3,4-triazole); poly-1,4-phenylene-2,5-(1,4-dithiin); poly-2,6-(4-phenylquinoline); poly-2,6-(4-phenylquinoline) plus a connecting unit; poly-2,2'-(m-phenylene)-6,6'-bibenzoxazole; poly-2,2'-(m-phenylene)-1,1'-dimethyl-6,6'-bibenzimidazole; poly-2,2'-(m-phenylene)-6,6'-bibenzothiazole; poly-2,2'-(N-methyl-p,p'-aminodiphenylene)-6,6'-bibenzoxazole; poly-2,5-phenoxazine; poly-2,5'-(3,7-dimethyl)phenoxazine; poly-2,5-(1,4-phenylene)phenoxazine; poly-3,7-(N-methylphenothiazine)-2,5-(1,3,4-oxadiazole); poly-3,7-(phenoxathiin)-4,4'-dithiobiphenylene; poly-1,4-dithiophenylene-2,6-thianthrene): poly-4,4'-N-methylaminodiphenylene-2,5-(1,3,4-oxadiazole); poly-2,2'-(p-phenylene)-6,6'-bibenzoxazole; poly-2,2'-(p-phenylene)-6,6'-bibenzothazole; and poly-2,2'-(p-phenylene)-1,1'-dimethyl-6,6'-bibenzimidazole.

6. A battery electrode according to Claim 3, wherein said electroactive polymer is a polymer comprising diradical units of the positional diradicals of quinoline, isoquinoline, quinoxaline, said diradicals interspersed with connecting units, substituted derivatives thereof, or mixtures thereof.

7. A battery electrode according to Claim 6, wherein the electroactive polymer is selected from

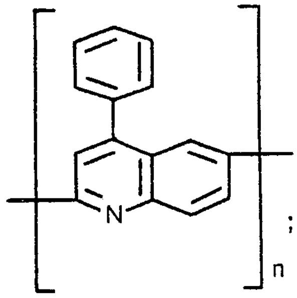

;

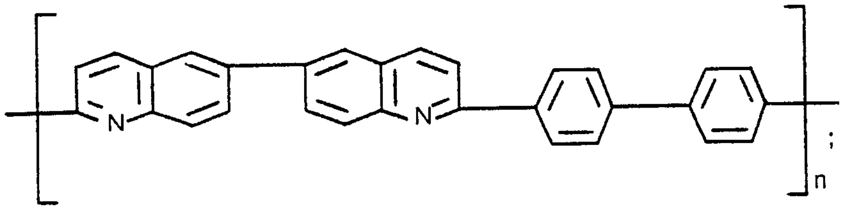

;

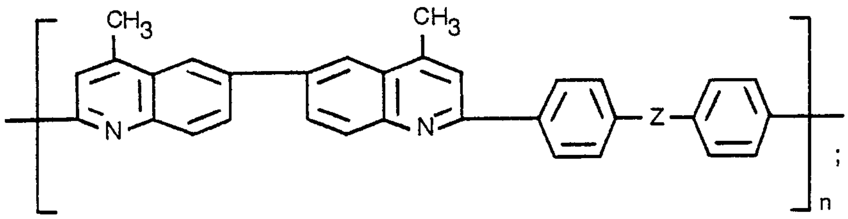

;

wherein Z is a connecting unit or nothing;

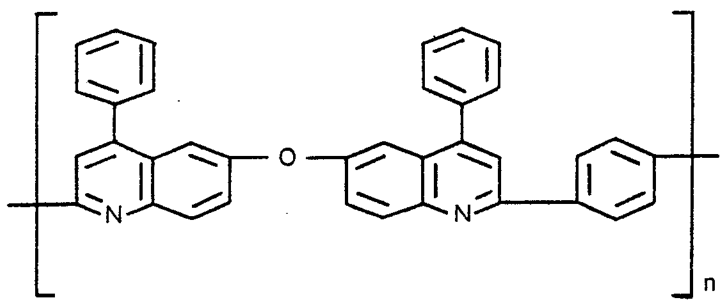

,

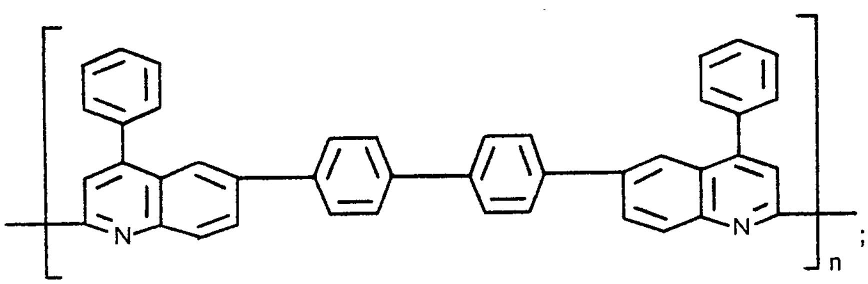

; and

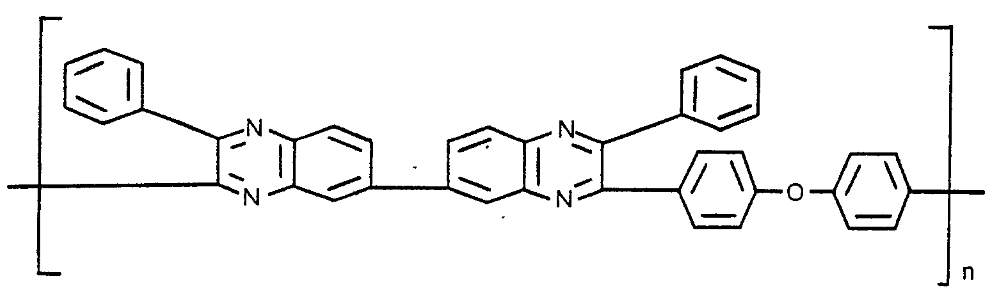

wherein n is the degree of polymerization.

8. A battery comprising a case which incorporates a cathode electrode, an anode electrode, a separator separating said cathode and anode electrodes, and an electrolyte, wherein at least one of said electrodes comprises an electrode as claimed in any one of Claims 1 to 7.

9. A battery as claimed in Claim 8, wherein the solvent of the electrolyte is selected from acetonitrile; polypropylene carbonate; tetrahydrofuran; propionitrile; butyronitrile; phenylacetonitrile; dimethylformamide; dimethoxythane; dimethylsulfoxide; pyridine; and mixtures thereof.

10. A battery as claimed in Claim 9, wherein a supporting electrolyte is dissolved in the solvent, the supporting electrolyte being a salt selected from a cation-anion pair wherein the cations are selected from $Li^+$, $Na^+$, $K^+$, $Cs^+$, $Mg^{++}$, $(CH_3)_4N^+$, $(C_2H_5)_4N^+$, $(C_3H_7)_4N^+$ and $(C_4H_9)_4N^+$, and the anions are selected from $F^-$,

$Cl^-$, $Br^-$, $I^-$, $ClO_4^-$, $BF_4^-$, $PF_6^-$, $AsF_6^-$, and $NO_3^-$.

11. A battery as claimed in claim 8, wherein the electroactive polymer forms the anode and the cathode is fabricated from a material which has a redox potential in the electrolyte more positive than the redox potential of the polymer, said cathode comprising a metal, a metal coated with a layer of one of its slightly soluble anion salts, a polymer different from the anode, said different polymer having a redox potential in the electrolyte which is more positive than the redox potential of the anode polymer, or an intercalation compound which can intercalate an ion present in the electrolyte.

12. A battery as claimed in claim 11, wherein the catbode is formed from a polymer selected from poly-2,2'-(m-phenylene)-6,6'-bibenzoxazole; poly-2,2'-(m-phenylene)-1,1'-dimethyl-6,6'-bibenzimidazole; poly-2,2'-(m-phenylene)-6,6'-bibenzothiazole; poly-2,2'-(N-methyl-p,p'-aminodiphenylene)-6,6'-bibenzoxazole; poly-2,5-phenoxazine; poly-2,5'-(3,7-dimethyl)phenoxazine; poly-2,5-(1,4-phenylene)phenoxazine; poly-3,7-(N-methylphenothiazine)-2,5-(1,3,4-oxadizole); poly-3,7-(phenoxathiin-4,4'-dithiobiphenylene); poly-(1,4-dithiophenylene-2,6-thianthrene); and poly-4,4'-N-methylaminodiphenylene-2,5-(1,3,4-oxadiazole).

13. A battery as claimed in Claim 11, wherein the cathode is polyacetylene; polypyrrole; polyphenylene sulfide; polyphenylene; poly-1,6-heptadiene; or mixtures thereof.

14. A battery as claimed in claim 11, wherein the cathode is the N-alkylated form of the polymer of the anode, said N-alkylated polymer having a redox potential more positive than the redox potential of the polymer anode.

15. A battery as claimed in claim 8, wherein the electroactive polymer forms the cathode and the anode is fabricated from a material which has a redox potential in the electrolyte more negative than the redox potential of the polymer, said anode comprising a metal, a metal coated with a layer of one of its slightly soluble anion slats, a polymer different from the cathode, said different polymer having a redox potential in the electrolyte which is more negative than the redox potential of the cathode polymer, or an intercalation compound which can intercalate an ion present in the electrolyte.

16. A battery as claimed in claim 15, wherein the cathode is formed from a reversible p-type polymer selected from poly-2,2'-(m-phenylene)-6,6'-bibenzoaxazole; poly-2,2'-(m-phenylene)-1,1'-dimethyl-6,6'-bibenzimidazole; poly-2,2'-(m-phenylene)-6,6'-bibenzothiazole; poly-2,2'-(N'-methyl-p,p'-aminodiphenylene)-6,6'-bibenzoxazole; poly-2,5-phenoxazine; poly-2,5-'-(3,7-dimethyl)phenoxazine; poly-2,5-(1,4-phenylene)phenoxazine; poly-3,7-(N-methylphenothiazine)-2,5-(1,3,4-oxadiazole); poly-3,7-(phenoxathiin-4,4'-dithiobiphenylene); poly-(1,4-dithiophenylene-2,6-thianthrene); poly-4,4'-N-methylaminodiphenylene-2,5-(1,3,4-oxadiazole); poly-2,2'-(p-phenylene)-6,6'-bibenzoxazole; poly-2,2'-(p-phenylene)-6,6'-bibenzothiazole; and poly-2,2'-(p-phenylene)-1,1'-diemthyl-6,6'-bibenzimidazole.

17. A battery as claimed in claim 16, wherein the anode is formed from a reversible n-type polymer selected from poly-2,2'-(p-phenylene)-1,1'-dimethyl-5,5'-bibenzimidazole; poly-2,2'-(p-phenylene)-5,5'-bibenzoxazole; poly-2,2'-(p-phenylene)-5,5'-bibenzothiazole; poly-2,6-(p-phenylene)-benzo[1,2-d:5,4-d']-bisoxazole; poly-2,6-(p-phenylene)-1,7-dimethyl-benzo[1,2-d:4,5-d']diimidazole; poly-2,6-(p-phenylene)-benzo[1,2-d:4,5-d']bisthiazole; poly-2,6-(m-phenylene)-benzo[1,2-d:4,5-d']bisthiazole; poly-1,4-phenylene-2,5-(1,3,4-oxadiazole); copolymer of oxadiazole and thiadiazole with 1,4 phenylene connecting units; copolymer of oxadiazole and thiadiazole; poly-1,4-phenylene-2,5-(1,3,4-thiadiazole); poly-1,4-phenylene-2,4-(1,3-thiazole); poly-1,4-phenylene-2,5-(1-phenyl-1,3,4-triazole); poly-1,4-phenylene-2,5-(1,4-dithiin); poly-2,6-(4-phenylquinoline); and poly-2,6-(4-phenylquinoline) plus a connecting unit.

18. A battery as claimed in claim 11, wherein the cathode is Ag, Fe, Cu, Zn, Ni, Pd, Sn or mixtures thereof, and the battery further incorporates an ion-selective membrane which separates the battery into an anode compartment and a cathode compartment, said membrane preventing metal ions from diffusing to the anode chamber and plating out on the anode.

19. A battery as claimed in claim 11, wherein the cathode is silver metal coated with a layer of a silver halide or an intercalation compound of $Li_xTiS_2$ wherein x is from 0 to 1.

20. A battery as claimed in claim 15, wherein the anode is lithium, sodium, potassium, rubidium, cesium, or an alloy thereof; or an intercalation compound of $Li_xWO_2$ wherein x is from 0 to 1.

21. A battery as claimed in claim 8, wherein the cathode and anode are reversible n-type and p-type polymers selected from poly-2,2'-(p-phenylene)-6,6'-bibenzoxazole; poly-2,2'-(p-phenylene)-6,6'-bibenzothiazole; and poly-2,2'-(p-phenylene)-1,1'-dimethyl-6,6'-bibenzimidazole.

22. A battery as claimed in claim 8, wherein the cathode comprises polypyrrole and the anode comprises poly-2,6-(4-phenylquinoline).

23. A battery as claimed in claim 19 wherein the cathode comprises silver coated with silver halide and the anode comprises poly-2,6-(4-phenylquinoline).

24. A battery as claimed in claim 15, wherein the anode is lithium and the cathode is poly-2,6-(4-phenylquinoline).

25. A battery as claimed in claim 11, wherein the cathode is poly-2,5-phenoxazine and the anode is poly-2,6-(4-phenylquinoline).

26. A battery as claimed in claim 11, wherein the cathode is poly-2,6-N-methyl-(4-phenylquinolinium) and the anode is poly-2,6-(4-phenylquinoline).

27. A battery as claimed in claim 11, wherein the cathode is poly-2,5-phenoxazine and the anode is poly-2,2'-(p-phenylene)-6,6'-bibenzoxazole.

28. A battery as claimed in claim 11, wherein the anode is poly-2,6-(p-phenylene)-benzo[1,2-d:5,4-d']-bisoxazole and the cathode is poly-2,5-phenoxazine.

29. A battery as claimed in claim 11, wherein the cathode is poly-2,5-phenoxazine and the anode is poly-2,6-(p-phenylene)-benzo[1,2-d:4,5-d']bisthiazole.

30. A battery as claimed in claim 11, wherein the cathode is poly-2,5-phenoxazine and the anode is poly-p-phenylene-2,5-(1,3,4-oxidazole).

31. A battery as claimed in claim 11, wherein the cathode is poly-2,2'-(m-phenylene)-6,6'-bibenzoxazole and the anode is poly-2,6-(p-phenylene)-benzo[1,2-d:4,5-d']bisthiazole.

32. A battery as claimed in claim 21, wherein the anode and the cathode are poly-2,2'-(p-phenylene)-6,6'-bibenzoxazole.

**Patentansprüche**

1. Batterieelektrode aus einem Stromkollektor und, als aktives Material der Elektrode, einem stabilen elektrisch leitenden linearen traktablen ungesättigten Polymeren, erhalten durch Einmengung von ladungskompensierenden ionischen Dotierungsmitteln in ein lineares ungesättigtes Polymeres, welches eine reversible Oxidation oder reversible Reduktion einzugehen vermag, und das zu einer gewünschten Elektrodenform verformt werden kann, wobei das Polymere ungesättigte diradikalische sich wiederholende Einheiten in dem Polymergrundgerüst aufweist, ausgewählt aus einem heterozyklischen Ringsystem umfassend wenigstens ein Atom der Gruppe 5B oder der Gruppe 6B, wobei keines der Ringkohlenstoffatome gesättigt ist, ein heterozyklisches Ringsystem umfassend wenigstens ein Atom der Gruppe 5B oder der Gruppe 6B, wobei keines der Ringkohlenstoffatome gesättigt ist, sowie eine Verbindungseinheit und Mischungen davon, wobei die ungesättigte diradikalische sich wiederholende Einheit in Form einer monomeren sich wiederholenden Einheit dazu in der Lage ist, widerholt eine reversible oxidation bzw. reversible Reduktion unter Bildung einer stabilen Ionenspezies einzugehen, und wobei die Verbindungseinheit in dem Polymergrundgerüst ein konjugiertes System oder Atom oder Gruppe von Atomen mit der Fähigkeit ist, eine π-Orbitüberlappung mit dem heterozyklischen Ringsystem aufrechtzuerhalten.

2. Batterieelektrode nach Anspruch 1, worin das Heteroatom der Gruppe 5B oder 6B aus N, P, As, O, S, Se, Te und Mischungen davon ausgewählt ist und keines der Heteroatome Ringverschmelzungsstellen einnimmt und die P, As, O, S, Se und Te-Atome keine benachbarten Ringpositionen einnehmen.

3. Batterieelektrode nach Anspruch 2, worin das Heteroatom ausgewählt ist aus N, S, O, sowie Mischungen davon.

4. Batterieelektrode nach Anspruch 2, worin die Diradikale positionelle Diradikale sind, ausgewählt aus Thianthrenen, Phenoxathiinen, Phenoxazin, N-Alkylphenothiazinen, Dihydrophenazin, Dialkyldihydrophenazin, Dibenzodioxin, Benzoxazol, Benzothiazol, Benzoselenazol, N-Alkyl-substituiertem Benzimidazol, 1,7-Dimethylbenzo[1,2-d:4,5-d']diimidazol, Benzo[1,2-d:5,4-d']bis-thiazol, Benzo[1,2-d:4,5-d']bis-thiazol, Benzo[1,2-d:4,5-d']bis-selenanzol, Benzo[1,2-d:5,4-d']bis-selenazol, Benzo[1,2-d:4,5-d']bis-tellurazol, Selenazol[5,4-f]benzothiazol, 1,8-Dialkylbenzo[1,2-d:3,4-d']diimidazol, Benzo[1,2-d:5,4-d']bis-oxazol; Benzo[1,2-d:4,5-d']bis-oxazol, Benzo[1,2-d:3,4-d']bis-thiazol, Benzo[1,2-d:3,4-d']bis-oxazol, Triazol sowie 1,4-Phenylen, Thiazole sowie 1,4-Phenylen, Oxadiazol sowie 1,4-Phenylen, Oxazol sowie 1,4-Phenylen, Thiazol sowie 1,4-Phenylen, Zinnolin, Chinazolin, Chinoxalin, 2-Phenylchinoxalin, 4-Phenylchinolin, Phthalazin, 1,5-Naphthyridin, 1,6-Naphthyridin, 1,7-Naphthyridin, 1,8-Naphthyridin, 2,6-Naphthyridin, Copyrine, 1,2,4-Benzotriazin, Pyrido[3,2-d]pyrimidin, Pyrido[4,3-d]pydrimidin, Pyrido[3,4-d]pyrimidin, Pyrido[2,3-d]pyrimidin, Pyrido[2,3-b]pyrazin, Pyrido[3,4-b]pyrazin, Pyrido[2,3-d]pyridazin, Pyrido[3,4-d]-pyridazin, Pyridazino[4,5-c]pyridazin, Pyrimido[5,4-d]pyrimidin, Pteridin, Pyrimido[4,5-d]pyridazin, Pyrimido[4,5-d]pyrimidin, Pyrazino[2,3-b]pyrazin, Pyrazino[2,3-d]pyridazin, Pyridazino[4,5-d]pyridazin, Pyrimido[4,5-c]pyridazin, Pyrazino[2,3-c]pyridazin, Pyrido[3,2-d]-as-triazin, Pyrimido[4,5-e]-as-triazin, Pyrido[2,3-e]-as-triazin und As.triazino[6,5-d]-as-triazin sowie Mischungen aus diesen Diradikalen.

5. Batterieelektrode nach Anspruch 4, worin das elektroaktive Polymere ausgewählt ist aus Poly-2,2'-(p-Phenylen)-1,1'-dimethyl-5,5'-bibenzimidazol, Poly-2,2'-(p-phenylen)-5,5'-bibenzoxazol, Poly-2,2'-(p-phenylen)-5,5'-bibenzthiazol, Poly-2,6-(p-phenylen)-benzo[1,2-d:5,4-d']bis-oxazol, Poly-2,6-(p-phenylen)-1,7-dimethyl-benzo[1,2-d:4,5-d']diimidazol, Poly-2,6-(p-phenylen)-benzo[1,2-d:4,5-d']bis-thiazol, Poly-2,6-(m-phenylen)-benzo[1,2-d:4,5-d']bis-thiazol, Poly-1,4-phenylen-2,5-(1,3,4-oxadiazol), einem Copolymeren aus Oxadiazol und Thiadiazol mit 1,4-Phenylen-Verbindungseinheiten, einem Copolymeren aus Oxadiazol und Thiadiazol, Poly-1,4-phenylen-2,5-(1,3,4-thiadiazole), Poly-1,4-phenylen-2,4-(1,3-thiazol), Poly-1,4-phenylen-2,5-(1-phenyl-1,3,4-triazol), Poly-1,4-phenylen-2,5-(1,4-dithiin), Poly-2,6-(4-phenylchinolin), Poly-2,6-(4-phenylchinolin) plus einer Verbindungseinheit, Poly-2,2'-(m-phenylen)-6,6'-bibenzoxazol, Poly-2,2'-(m-phenylen)-1,1'-dimethyl-6,6'-bibenzimidazol, Poly-2,2'-(m-phenylen)-6,6'-bibenzothiazol, Poly-2,2'-(N-methyl-p,p'-aminodiphenylen)-6,6'-bibenzoxazol, Poly-2,5-phenoxazin, Poly-2,5'-(3,7-dimethyl)phenoxazin, Poly-2,5'-(1,4-phenylen)phenoxazin, Poly-3,7-(N-methylphenothiazin)-2,5-(1,3,4-oxadiazol), Poly-3,7-(phenoxathiin)-4,4'-dithioiphenylen, Poly-(1,4-dithiophenylen-2,6-thianthren), Poly-4,4'-N-methylaminodiphenylen-2,5-(1,3,4-oxadiazol), Poly-2,2'-(p-phenylen)-6,6'-bibenzoxazole, Poly-2,2'-(p-phenylen)-6,6'-bibenzothiazol sowie Poly-2,2'-(p-phenylen)-1,1'-dimethyl-6,6'-bibenzimidazol.

6. Batterieelektrode nach Anspruch 3, worin das elektroaktive Polymere ein Polymeres mit diradikalischen Einheiten der positionellen Diradikale von Chinolin,.Isochinolin, Chinoxalin ist, wobei diese

Diradikale von Verbindungseinheiten, substituierten Derivaten oder Mischungen davon durchsetzt sind.

7. Batterieelektrode nach Anspruch 6, worin das elektroaktive Polymere ausgewählt ist aus

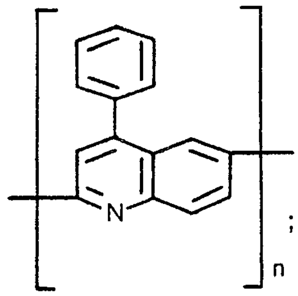
;

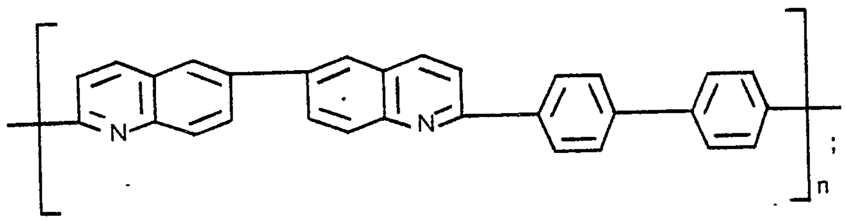
;

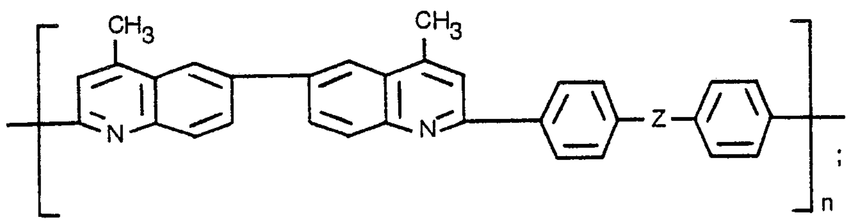
;

worin Z eine Verbindungseinheit oder nichts bedeutet

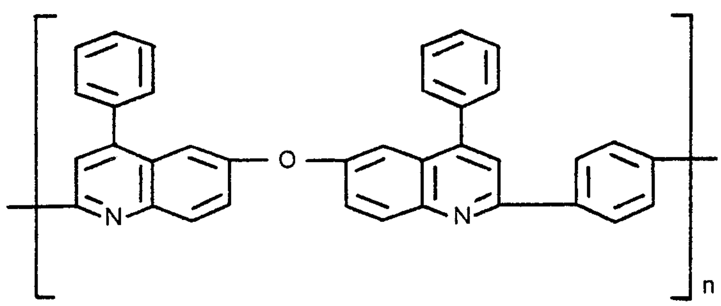
,

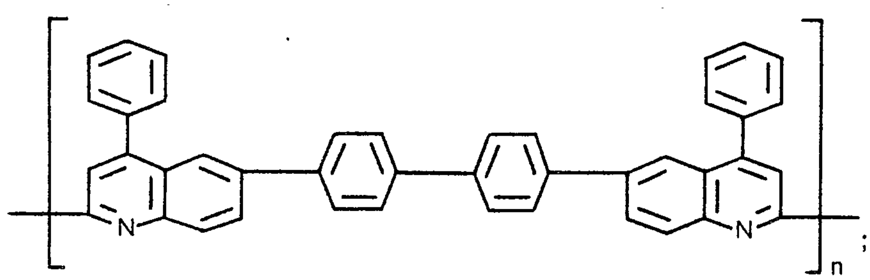
; und

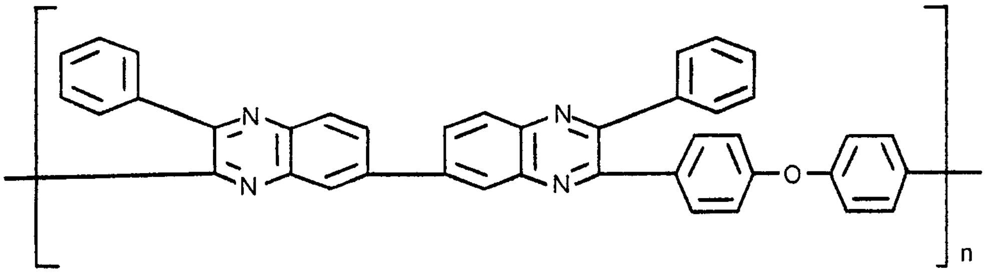

worin n der Polymerisationsgrad ist.

8. Batterie aus einem Gehäuse, das eine Kathodenelektrode, eine Anodenelektrode, einen Separator, der die Kathoden- und Anodenelektrode trennt, und einen Elektrolyt aufrimmt, werin wenigstens eine der Elektroden aus einer Elektrode gemäß einem der Ansprüche 1 bis 7 besteht.

9. Batterie nach Anspruch 8, worin das Lösungsmittel des Elektrolyten ausgewählt ist aus Acetonitril, Polypropylencarbonat, Tetrahydrofuran, Propionitril, Butyronitril, Phenylacetonitril, Dimethylformamid, Dimethoxyethan, Dimethylsulfoxid, Pyridin oder Mischungen davon.

10. Batterie nach Anspruch 9, worin ein unterstützender Elektrolyt in dem Lösungsmittel aufgelöst ist, wobei der unterstützende Elektrolyt ein Salz ist, ausgewählt aus einem Kation-Anion-Paar, wobei die Kationen ausgewählt sind aus.

11. Batterie nach Anspruch 8, worin das elektroaktive Polymere die Anode bildet und die Kathode aus einem Material erzeugt worden ist, das ein Redoxpotential in dem Elektrolyten besitzt, das positiver ist als das Redoxpotential des Polymeren, wobei die Kathode ein Metall, ein Metall, beschichtet mit einer Schicht aus einem seiner leichtlöslichen Anionensalze, ein Polymeres, das von der Anode verschieden ist, wobei das verschiedene Polymere eine Redoxpotential in dem Elektrolyten besitzt, das positiver ist als das Redoxpotential des Anodenpolymeren, oder ene Einlagerungsverbindung ist, die ein in dem Elektrolyten vorliegendes Ion einzulagern vermag.

12. Batterie nach Anspruch 11, worin die Kathode aus einem Polymeren gebildet ist, ausgewählt aus Poly-2,2'-(m-phenylen)-6,6'-bibenzoxazol, Poly-2,2'-(m-phenylen)-1,1'-dimethyl-6,6'-bibenzimidazol, Poly-2,2'-(m-phenylen)-6,6'-bibenzothiazol, Poly-2,2'-(N-methyl-p,p'-aminodiphenylen)-6,6'-bibenzoxazol, Poly-2,5-phenoxazin, Poly-2,5'-(3,7-dimethyl)phenoxazin, Poly-2,5-(1,4-phenylen)phenoxazin, Poly-3,7-(N-methylphenothiazin)-2,5-(1,3,4-oxadioazol), Poly-3,7-(phenoxathiin-4,4'-dithiobiphenylen), Poly-(1,4-dithiophenylen-2,6-thianthren) sowie Poly-4,4'-N-methylaminodiphenylen-2,5-(1,3,4-oxadiazol).

13. Batterie nach Anspruch 11, worin die Kathode aus Polyacetylen, Polypyrrol, Polyphenylensulfid, Polyphenylen, Poly-1,6-heptadien oder Mischungen davon besteht.

14. Batterie nach Anspruch 11, worin die Kathode die N-alkylierte Form des Polymeren der Anode ist, wobei das N-allierte Polymere ein Redoxpotential besitzt, das positiver ist als das Redoxpotential der Polymeranode.

15. Batterie nach Anspruch 8, worin das eletroaktive Polymere die Kathode bildet und die Anode aus einem Material erzeugt worden ist, das ein Redoxpotential in dem Elktrolyten besitzt, das negativer ist als das Redoxpotential des Polymeren, wobei die Anode ein Metall, ein Metall, beschichtet mit einer Schicht aus einem seiner leichtlöslichen Anionensalze, ein Polymeres, das von dem der Kathode verschieden ist, wobei das verschiedene Polymere eine Redoxpotential in dem Elektrolyten besitzt, das negativer ist als das Redoxpotential des Kathodenpolymeren, oder eine Einlagerungsverbindung ist, die ein Ion, das in dem Elektrolyten vorliegt, einzulagern vermag.

16. Batterie nach Anspruch 15, worin die Kathode aus einem reversiblen p-Typ-Polymeren gebildet ist, ausgewählt aus Poly-2,2'-(m-phenylen)-6,6'-bibenzoxazol, Poly-2,2'-(m-phenylen)-1,1'-dimethyl-6,6'-bibenzimidazol, Poly-2,2'-(m-phenylen)-6,6'-bibenzothiazol, Poly-2,2'-N'-methyl-p,p'-aminodiphenylen)-6,6'-bibenzoxazol, Poly-2,5-phenoxazin, Poly-2,5'-(3,7-dimethyl)-phenoxazin, Poly-2,5-(1,4-phenylen)phenoxazin, Poly-3,7-(N-methylphenothiazin)-2,5-(1,3,4-oxadiazol), Poly-3,7-(phenoxathiin-4,4'-dithiobiphenylen), Poly-(1,4-dithiophenylen-2,6-thianthren), Poly-4,4'-N-methylaminodiphenylen-2,5-(1,3,4-oxadiazol), Poly-2,2'-(p-phenylen)-6,6'-bibenzoxazol, Poly-2,2'-(p-phenylen)-6,6'-bibenzothiazol sowie Poly-2,2'-(p-phenylen)-1,1'-dimethyl-6,6'-bibenzimidazol.

17. Batterie nach Anspruch 16, worin die Anode aus einem reversiblen n-Typ-Polymeren gebildet ist, ausgewählt aus Poly-2,2'-(p-phenylen)-1,1'-diemthyl-5,5'-bibenzimidazol, Poly-2,2'-(p-phenylen)-5,5'-bibenzoxazol, Poly-2,2'-(p-phenylen)-5,5'-bibenzothiazol, Poly-2,6-(p-phenylen)-benzo[1,2-d:5,4-d']bis-oxazol, Poly-2,6-(p-phenylen)-1,7-dimethyl-benzo[1,2-d:4,5-d']diimidazol, Poly-2,6-(p-phenylen)-benzo[1,2-d:4,5-d']bis-thiazol, Poly-2,6-(m-phenylen)-benzo[1,2-d:4,5-d']bis-thiazol, Poly-1,4-phenylen-2,5-(1,3,4-oxadiazol), einem Copolymeren aus Oxadiazol und Thiadiazol mit 1,4-Phenylenverbindungseinheiten, ein Copolymer aus Oxadiazol und Thiadiazol, Poly-1,4-phenylen-2,5-(1,3,4-thiadiazol), Poly-1,4-phenylen-2,4-(1,3-thiazol), Poly-1,4-phenylen-2,5-(1-phenyl-1,3,4-triazol), Poly-1,4-phenylen-2,5-(1,4-dithiin), Poly-2,6-(4-phenylchinolin sowie Poly-2,6-(4-phenylchinolin) plus einer Verbindungseinheit.

18. Batterie nach Anspruch 11, worin die Kathode aus Ag, Fe, Cu, Zn, Ni, Pd, Sn oder Mischungen davon besteht und die Batterie außerdem eine ionenselektive Membran aufweist, welche die Batterie in ein

Anodenabteil und Kathodenabteil trennt, wobei diese Membran Metallionen daran hindert, in die Anodenkammer zu diffundieren und sich auf der Anode abzuscheiden.

19. Batterie nach Anspruch 11, worin die Kathode aus Silbermetall besteht, beschichtet mit einer Schicht aus einem Silberhalogenid oder einer Einlagerungsverbindung von $Li_xTiS_2$, worin x 0 bis 1 ist.

20. Batterie nach Anspruch 15, worin die Anode Lithium, Natrium, Kalium, Rubidium, Cäsium oder eine Legierung davon oder eine Einlagerungsverbindung von $Li_xWO_2$ ist, worin x 0 bis 1 ist.

21. Batterie nach Anspruch 8, worin die Kathode und die Anode reversible n-Typ- und p-Typ-Polymere sind, ausgewählt aus Poly-2,2'-(p-phenylen)-6,6'-bibenzoxazol, Poly-2,2'-(p-phenylen)-6,6'-bibenzothiazol sowie Poly-2,2'-(p-phenylen)-1,1'-dimethyl-6,6'-bibenzimidazol.

22. Batterie nach Anspruch 8, worin die Kathode aus Polypyrrol und die Anode aus Poly-2,6-(4-phenylchinolin) besteht.

23. Batterie nach Anspruch 19, worin die Kathode aus Silber, beschichtet mit einem Silberhalogenid, und die Anode aus Poly-2,6-(4-phenylchinolin) besteht.

24. Batterie nach Anspruch 15, worin die Anode aus Lithium besteht und die Kathode Poly-2,6-(4-phenylchinolin) ist.

25. Batterie nach Anspruch 11, worin die Kathode Poly-2,5-phenoxazin und die Anode Poly-2,6-(4-Phenylchinolin) ist.

26. Batterie nach Anspruch 11, worin die Kathode Poly-2,6-N-methyl-(4-phenylchinolin) und die Anode Poly-2,6-(4-phenylchinolin) ist.

27. Batterie nach Anspruch 11, worin die Kathode Poly-2,5-phenoxazin und die Anode Poly-2,2'-(p-phenylen)-6,6'-bibenzoxazol ist.

28. Batterie nach Anspruch 11, worin die Anode Poly-2,6-(p-phenylen)-benzo[1,2-d:5,4-d']bis-oxazol und die Kathode Poly-2,5-phenoxazin ist.

29. Batterie nach Anspruch 11, worin die Kathode Poly-2,5-phenoxazin und die Anode Poly-2,6-(p-phenylen)-benzo[1,2-d:4,5-d']bis-thiazol ist.

30. Batterie nach Anspruch 11, worin die Kathode Poly-2,5-phenoxazin und die Anode Poly-p-phenylen-2,5-(1,3,4-oxadiazol) ist.

31. Batterie nach Anspruch 11, worin die Kathode Poly-2,2'-(m-phenylen)-6,6'-bibenzoxazol und die Anode Poly-2,6-(p-phenylen)-benzo[1,2-d:4,5-d']bis-thiazol ist.

32. Batterie nach Anspruch 21, worin die Anode und die Kathode aus Poly-2,2'-(p-phenylen)-6,6'-bibenzoxazol bestehen.

**Revendications**

1. Electrode pour batterie comprenant un collecteur de courant et, comme matière active de l'électrode, un polymère linéaire non saturé électroconducteur stable, facile à travailler, obtenu par l'incorporation de dopeurs ioniques compensateurs de charge dans un polymère linéaire non saturé qui est capable de subir une oxydation réversible ou une réduction réversible et qui peut être façonné selon une forme d'électrode désirée, ledit polymère comprenant des motifs répétés diradicalaires non saturés dans la chaîne principale polymérique, choisis dans le groupe consistant en un système hétérocyclique de noyaux comprenant au moins un atome du Groupe 5B ou du Groupe 6B, dont aucun des atomes de carbone des noyaux n'est saturé, un système hétrérocyclique de noyaux comprenant au moins un atome du Groupe 5B ou du Groupe 6B dont aucun des atomes de carbone des noyaux n'est saturé, et un motif de jonction, et leurs mélanges, ledit motif répété diradicalaire non saturé sous la forme d'un motif monomérique répété étant capable de subir de façon répétée une oxydation réversible et une réduction réversible pour former respectivement une espèce ionique stable et ledit motif de jonction dans la chaîne principale du polymère étant un système conjugué ou un atome ou un groupe d'atomes qui maintennent un recouvrement de l'orbitale π avec le système hétérocyclique de noyaux.

2. Electrode de batterie suivant la revendication 1, dans laquelle l'hétéro-atome du Groupe 5B ou 6B est choisi entre N, P, As, O, S, Se, Te et leurs mélanges et aucun des hétéro-atomes n'occupe des positions de condensation des noyaux et les atomes de P, As, O, S, Se et Te n'occupent pas de positions adjacentes sur le noyau.

3. Electrode de batterie suivant la revendication 2, dans laquelle ledit hétéro-atome est choisi entre N, S, O et leurs mélanges.

4. Electrode de batterie suivant la revendication 2, dans laquelle les diradicaux sont des diradicaux de position choisis entre des thianthrènes; des phénoxathinnes; la phénoxazine; une N-alkylphénothiazine; la dihydrophénazine; une dialkyldihydrophénazine; la dibenzodioxine; le benzoxazole; le benzothiazole; le benzosélénazole; un benzimidazole à substituant N-alkyle; le 1,7-diméthylbenzo[1,2-d:4,5-d']diimidazole; le benzo[1,2-d:5,4-d']bisthiazole; le benzo[1,2-d:4,5-d']bisthiazole; le benzo[1,2-d:4,5-d']bis-sélénazole; le benzo[1,2-d:5,4-d']bis-sélénazole; le benzo[1,2-d:4,5-d']bistellurazole; le sélénazole[5,4-f]benzothiazole; un 1,8-dialkyl-benzo[1,2-d:3,4-d']diimidazole; le benzo[1,2-d:5,4-d']bisoxazole; le benzo[1,2-d:4,5-d']bisoxazole; le benzo[1,2-d:3,4-d']bizoxazole; le benzo[1,2-d:3,4-d']bisthiazole; le triazole et le 1,4-phénylène; le thiadiazole et le 1,4-phénylène; l'oxadiazole et le 1,4-phénylène; l'oxazole et le 1,4-phénylène; le thiazole et le 1,4-phénylène; la cinnoline; la quinazoline; la quinoxaline; la 2-phénylquinoxaline; la 4-phénylquinoléine; la phtalazine; la 1,5-naphtyridine; la 1,6-naphtyridine; la 1,7-naphtyridine; la 1,8-naphtyridine;

la 2,6 naphtyridine; la copyrine; la 1,2,4-benzotriazine; la pyrido[3,2-d]pyrimidine; la pyrido[4,3-d]-pyrimidine; la pyrido[3,4-d]pyrimidine; la pyrido[2,3-d]pyrimidine; la pyrido[2,3-b]pyrazine; la pyrido[3,4-b]pyrazine; la pyrido[2,3-d]pyridazine; la pyrido[3,4-d]pyridazine; la pyridazino[4,5-c]pyridazine; la pyrimido[5,4-d]pyrimidine; la ptéridine; la pyrimido[4,5-d]pyridazine; la pyrimido[4,5-d]pyrimidine; la pyrazino[2,3-b]pyrazine; la pyrazino[2,3-d]-pyridazine; la pyridazino[4,5-d]pyridazine; la pyrimido[4,5-c]-pyridazine; la pyrazino[2,3-c]pyridazine; la pyrido[3,2-d]-as-triazine; la pyrimido[4,5-e]-as-triazine; la pyrido[2,3-e]-as-triazine et l'as-triazino[6,5-d]-as-triazine; et des mélanges de ces diradicaux.

5. Electrode de batterie suivant la revendication 4, dans laquelle le polymère électroactif est choisi entre un poly-2,2'-(p-phénylène)-1,1'-diméthyl-5,5'-bibenzimidazole; poly-2,2'-(p-phénylène)-5,5'-bibenzoxazole; poly-2,2'-(p-phénylène)-5,5'-bibenzothiazole; poly-2,6-(p-phénylène)benzo[1,2-d:5,4-d']bisoxazole; poly-2,6-(p-phénylène)-1,7-diméthyl-benzo[1,2-d:4,5-d']diimidazole; poly-2,6-(p-phénylène)-benzo[1,2-d:4,5-d']bisthiazole; poly-2,6-(p-phénylène)benzo[1,2-d:4,5-d']bisthiazole; poly-1,4-phénylène-2,5-(1,3,4-oxadiazole); un copolymère d'oxadiazole et de thiadiazole avec des motifs 1,4-phénylène de jonction; un copolymère d'oxadiazole et de thiadiazole; un poly-1,4-phénylène-2,5-(1,3,4-thiadiazole); poly-1,4-phénylène-2,4-(1,3-thiazole); poly-1,4-phénylène-2,5-(1-phényl-1,3,4-triazole); une poly-1,4-phénylène-2,5-(1,4-dithiine); poly-2,6-(4-phénylquinoléine); poly-2,6-(4-phénylquinoléine) plus un motif de jonction; un poly-2,2'-(m-phénylène)-6,6'-bibenzoxazole; poly-2,2'-(m-phénylène)-1,1'-diméthyl-6,6'-bibenzimidazole; poly-2,2'-(m-phénylène)-6,6'-bibenzothiazole; poly-2,2'-(N-méthyl-p,p'-aminodiphénylène)-6,6'-bibenzoxazole; une poly-2,5-phénoxazine; poly-2,5'-(3,7-diméthyl)phénoxazine; poly-2,5-(1,4-phénylène)phénoxazine; un poly-3,7-(N-méthylphénothiazine)-2,5-(1,3,4-oxadiazole); poly-3,7-(phénoxathiin)-4,4'-dithiobiphénylène; poly-(1,4-dithiophénylène-2,6-thianthrène); poly-4,4'-N-méthylaminodiphénylène-2,5-(1,3,4-oxadiazole); poly-2,2'-(p-phénylène)-6,6'-bibenzoxazole; poly-2,2'-(p-phénylène)-6,6'-bibenzothiazole; et poly-2,2'-(p-phénylène)-1,1'-diméthyl-6,6'-bibenzimidazole.

6. Electrode de batterie suivant la revendication 3, dans laquelle le polymère électroactif est un polymère comprenant des motifs diradicalaires des diradicaux de position de la quinoléine, de l'isoquinoléine, de la quinoxaline, ces diradicaux étant intercalés avec des motifs de jonction, leurs dérivés substitués, ou leurs mélanges.

7. Electrode de batterie suivant la revendication 6, dans laquelle le polymère électroactif est choisi entre

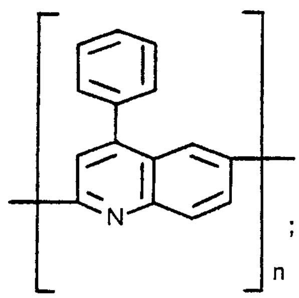

;

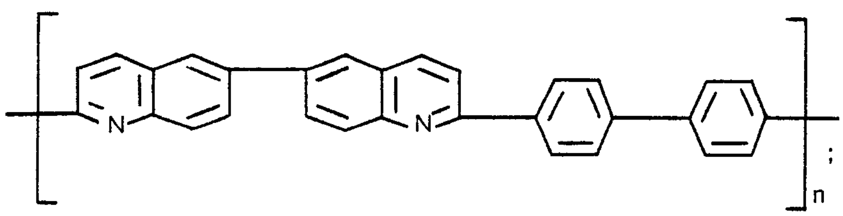

;

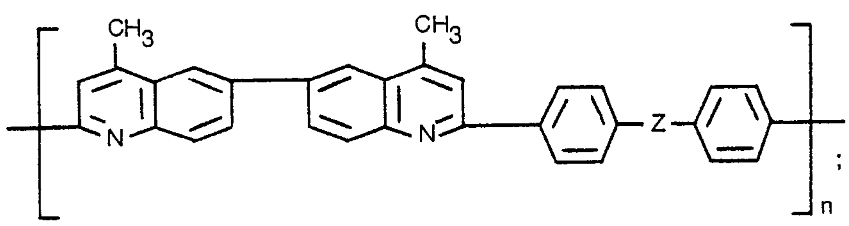

;

où Z est un motif de jonction ou ne représente rien;

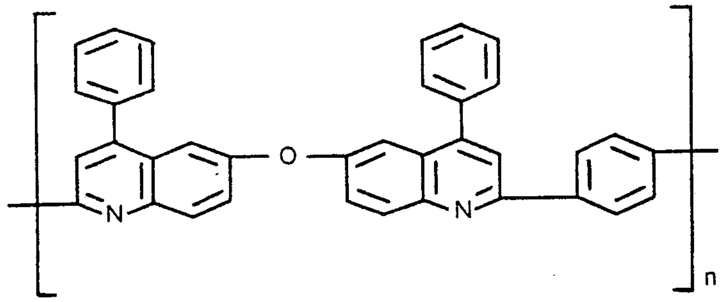

,

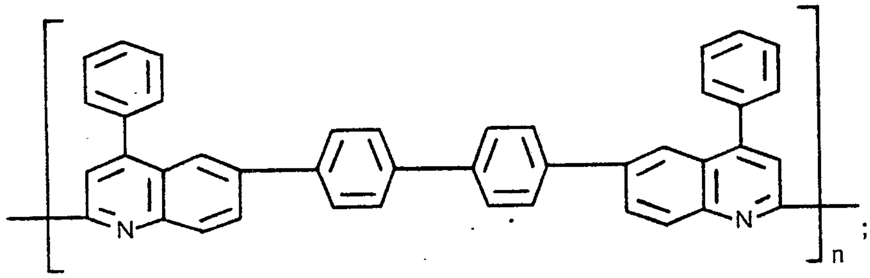

; et

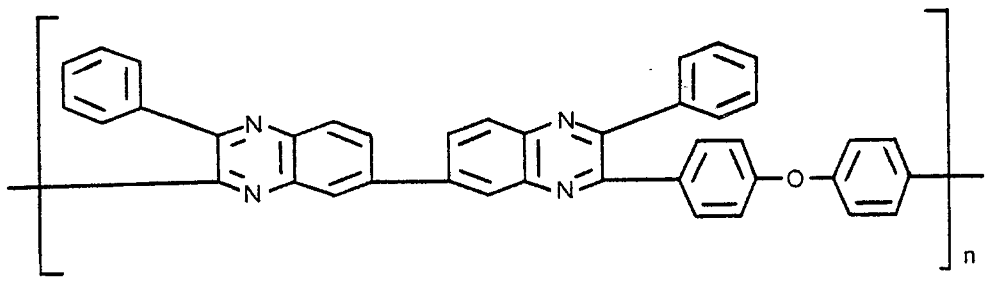

où n est le degré de polymérisation.

8. Batterie comprenant un boîtier qui renferme une électrode cathodique, une électrode anodique, un séparateur pour les électrodes cathodique an anodique et un électrolyte, l'une au moins desdites électrodes comprenant une électrode suivant l'une quelconque des revendications 1 à 7.

9. Batterie suivant la revendication 8, dans laquelle le solvant de l'électrolyte est choisi entre l'acétonitrile; un polypropylène-carbonate; le tétrahydrofuranne; le propionitrile; le butyronitrile, le phénylacétonitrile, le diméthylformamide; le diméthoxyéthane; le diméthylsulfoxyde; la pyridine; et leurs mélanges.

10. Batterie suivant la revendication 9, dans laquelle un électrolyte de support est dissous dans le solvant, l'électrolyte de support étant un sel choisi entre une paire cation-anion dont les cations sont choisis entre $Li^+$, $Na^+$, $K^+$, $Cs^+$, $Mg^{++}$, $(CH_3)_4N^+$, $(C_2H_5)_4N^+$, $(C_3H_7)_4N^+$ et $(C_4H_9)_4N^+$, et les anions sont choisis entre $F^-$, $Cl^-$, $Br^-$, $I^-$, $ClO_4^-$, $BF_4^-$, $PF_6^-$, $AsF_6^-$ et $NO_3^-$.

11. Batterie suivant la revendication 8, dans laquelle le polymère électroactif forme l'anode, et la cathode est réalisée en une matière qui a un potentiel d'oxydoréduction dans l'électrolyte plus positif que le potentiel d'oxydoréduction du polymère, ladite cathode comprenant un métal, un métal revêtu d'une couche de l'un de ses sels d'anions légèrement solubles, un polymère différent de l'anode, ledit polymère différent ayant un potentiel d'oxydoréduction dans l'électrolyte qui est plus positif que le potentiel d'oxydoréduction du polymère de l'anode, ou un composé d'intercalation qui peut intercaler un ion présent dans l'électrolyte.

12. Batterie suivant la revendication 11, dans laquelle la cathode est réalisée à partir d'un polymère choisi entre un poly-2,2'-(m-phénylène)-6,6'-bibenzoxazole; poly-2,2'-(m-phénylène)-1,1'-diméthyl-6,6'-bibenzimidazole; poly-2,2'-(m-phénylène)-6,6'-bibenzothiazole; poly-2,2'-(N-méthyl-p,p'-aminodiphénylène-6,6'-bibenzoxazole; une poly-2,5-phénoxazine; poly-2,5'-(3,7-diméthyl)phénoxazine; poly-2,5-(1,4-phénylène)phénoxazine; un poly-3,7-(N-méthylphénothiazine)-2,5-(1,3,4-oxadiazole); poly-3,7-(phénoxathiin-4,4'-dithiobiphénylène); poly-(1,4-dithiophénylène-2,6-thianthrène); et poly-4,4'-N-méthylaminodiphénylène-2,5-(1,3,4-oxadiazole).

13. Batterie suivant la revendication 11, dans laquelle la cathode est en polyacétylène; polypyrrole; polyphénylène-sulfure; polyphénylène; poly-1,6-heptadiène; ou leurs mélanges.

14. Batterie suivant la revendication 11, dans laquelle la cathode est la forme N-alkylée du polymère de l'anode, ledit polymère N-alkylé ayant un potentiel d'oxydoréduction plus positif que le potentiel d'oxydoréduction de l'anode en polymère.

15. Batterie suivant la revendication 8, dans laquelle le polymère électroactif forme la cathode, et

l'anode est réalisée en une matière qui a un potentiel d'oxydoréduction dans l'électrolyte plus négatif que le potentiel d'oxydoréduction du polymère, ladite anode comprenant un métal, un métal revêtu d'une couche de l'un de ses sels d'anions légèrement solubles, un polymère différent de la cathode, ledit polymère différent ayant un potentiel d'oxydoréduction dans l'électrolyte qui est plus négatif que le potentiel d'oxydoréduction du polymère de la cathode, ou un composé d'intercalation qui peut intercaler un ion présent dans l'électrolyte.

16. Batterie suivant la revendication 15, dans laquelle la cathode est formée à partir d'un polymère de type p réversible choisi entre un poly-2,2'-(m-phénylène)-6,6'-bibenzoxazole; poly-2,2'-(m-phénylène)-1,1'-diméthyl-6,6'-bibenzimidazole; poly-2,2'-(m-phénylène)-6,6'-bibenzothiazole; poly-2,2'-(N'-méthyl-p,p'-aminodiphénylène)-6,6'-bibenzoxazole; une poly-2,5-phénoxazine; poly-2,5'-(3,7-diméthyl)-phénoxazine; poly-2,5-(1,4-phénylène)phénoxazine; un poly-3,7-(N-méthylphénothiazine)-2,5-(1,3,4-oxadiazole); poly-3,7-(phénoxathiin-4,4'-dithiobiphénylène); poly-(1,4-dithiophénylène-2,6-thianthrène); poly-4,4'-N-méthyl-aminodiphénylène-2,5-(1,3,4-oxadiazole); poly-2,2'-(p-phénylène)-6,6'-bibenzoxazole; poly-2,2'-(p-phénylène)-6,6'-bibenzothiazole; et poly-2,2'-(p-phénylène)-1,1'-diméthyl-6,6'-bibenzimidazole.

17. Batterie suivant la revendication 16, dans laquelle l'anode est formée à partir d'un polymère de type n réversible choisi entre un poly-2,2'-(p-phénylène)-1,1'-diméthyl-5,5'-bibenzimidazole; poly-2,2'-(p-phénylène)-5,5'-bibenzoxazole; poly-2,2'-(p-phénylène)-5,5'-bibenzothiazole; poly-2,6-(p-phénylène)-benzo[1,2-d:5,4-d']bisoxazole; poly-2,6-(p-phénylène)-1,7-diméthyl-benzo[1,2-d:4,5-d']diimidazole; poly-2,6-(p-phénylène)-benzo[1,2-d:4,5-d']bisthiazole; poly-2,6-(m-phénylène)-benzo[1,2-d:4,5-d']bisthiazole; poly-1,4-phénylène-2,5-(1,3,4-oxadiazole); un copolymère d'oxadiazole et de thiadiazole avec des motifs 1,4-phénylène de jonction; un copolymère d'oxadiazole et de thiadiazole; un poly-1,4-phénylène-2,5-(1,3,4-thiadiazole); poly-1,4-phénylène-2,4-(1,3-thiazole); poly-1,4-phénylène-2,5-(1-phényl-1,3,4-triazole); une poly-1,4-phénylène-2,5-(1,4-dithiine); poly-2,6-(4-phénylquinoléine); et poly-2,6-(4-phénylquinoléine) plus un motif de jonction.

18. Batterie suivant la revendication 11, dans laquelle la cathode est en Ag, Fe, Cu, Zn, Ni, Pd, Sn ou leurs mélanges, et la batterie renferme en outre une membrane sélective envers les ions, qui divise la batterie en un compartiment anodique et un compartiment cathodique, ladite membrane empêchant les ions métalliques de diffuser vers la chambre anodique et de se déposer sur l'anode.

19. Batterie suivant la revendication 11, dans laquelle la cathode est en argent métallique revêtu d'une couche d'un halogénure d'argent ou d'un composé d'intercalation de formule $Li_xTiS_2$ dans laquelle x a une valeur de 0 à 1.

20. Batterie suivant la revendication 15, dans laquelle l'anode est en lithium, sodium, potassium, rubidium, césium ou en un alliage de ces métaux; ou un composé d'intercalation de formule $Li_xWO_2$ dans laquelle x a une valeur de 0 à 1.

21. Batterie suivant la revendication 8, dans laquelle la cathode et l'anode sont des polymères de type n et de type p réversibles choisis entre un poly-2,2'-(p-phénylène)-6,6'-bibenzoxazole; un poly-2,2'-(p-phénylène)-6,6'-bibenzothiazole; et un poly-2,2'-(p-phénylène)-1,1'-diméthyl-6,6'-bibenzimidazole.

22. Batterie suivant la revendication 8, dans laquelle la cathode comprend un polypyrrole et l'anode comprend une poly-2,6-(4-phénylquinoléine).

23. Batterie suivant la revendication 19, dans laquelle la cathode comprend de l'argent revêtu d'un halogénure d'argent et l'anode comprend une poly-2,6-(4-phénylquinoléine).

24. Batterie suivant la revendication 15, dans laquelle l'anode est en lithium et la cathode est en poly-2,6-(4-phénylquinoléine).

25. Batterie suivant la revendication 11, dans laquelle la cathode est en poly-2,5-phénoxazine et l'anode est en poly-2,6-(4-phénylquinoléine).

26. Batterie suivant la revendication 11, dans laquelle la cathode est en poly-2,6-N-méthyl-(4-phénylquinolinium) et l'anode est en poly-2,6-(4-phénylquinoléine).

27. Batterie suivant la revendication 11, dans laquelle la cathode est en poly-2,5-phénoxazine et l'anode est en poly-2,2'-(p-phénylène)-6,6'-bibenzoxazole.

28. Batterie suivant la revendication 11, dans laquelle l'anode est en poly-2,6'-(p-phénylène)-benzo[1,2-d:5,4-d']bisoxazole et la cathode est en poly-2,5-phénoxazine.

29. Batterie suivant la revendication 11, dans laquelle la cathode est en poly-2,5-phénoxazine et l'anode est en poly-2,2'-(p-phénylène)-benzo[1,2-d:4,5-d']bisthiazole.

30. Batterie suivant la revendication 11, dans laquelle la cathode est en poly-2,5-phénoxazine et l'anode est en poly-p-phénylène-2,5-(1,3,4-oxadiazole).

31. Batterie suivant la revendication 11, dans laquelle la cathode est en poly-2,2'-(m-phénylène)-6,6'-bibenzoxazole et l'anode est en poly-2,6-(p-phénylène)-benzo[1,2-d:4,5-d']bisthiazole.

32. Batterie suivant la revendication 21, dans laquelle l'anode et la cathode sont en poly-2,2'-(p-phénylène)-6,6'-bibenzoxazole.

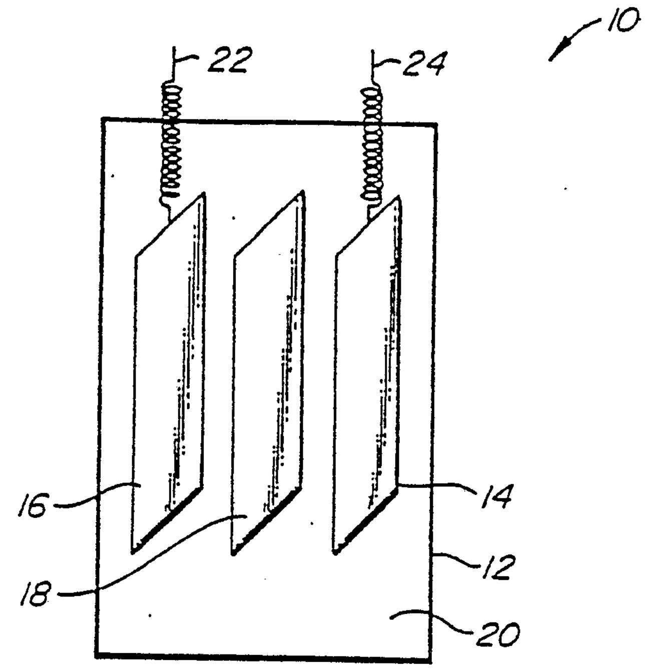


FIG._1.